# EUROPEAN PATENT SPECIFICATION

(11) **EP 1 907 470 B1**
(45) Date of publication and mention of the grant of the patent: **10.04.2013**
(21) Application number: 06774039.9
(22) Date of filing: 27.06.2006
(51) Int. Cl.: C08L 1/00, C09D 189/00, C09D 101/00

(54) **IONIC LIQUID RECONSTITUTED CELLULOSE COMPOSITES AS SOLID SUPPORT MATRICES**
MIT IONISCHER FLÜSSIGKEIT REKONSTITUIERTE CELLULOSEVERBUNDWERKSTOFFE ALS FESTE TRÄGERMATRIZES
COMPOSITES COMPRENANT DE LA CELLULOSE RECONSTITUEE PAR UN LIQUIDE IONIQUE SERVANT DE MATRICES DE SUPPORT SOLIDES

(30) Priority: 29.06.2005 US 694902 P
(43) Date of publication of application: 09.04.2008
(73) Proprietor: The University of Alabama, Tuscaloosa, AL 35487-0106 (US)
(72) Inventor: ROGERS, Robin, D., Tuscaloosa, AL 35401 (US); DALY, Daniel, T., Tuscaloosa, AL 25405 (US); TURNER, Megan, B., Tuscaloosa, AL 35405 (US); SPEAR, Scott, K., Bakston, AL 35542 (US); HOLBREY, John, D., Tuscaloosa, AL 35401 (US)
(74) Representative: Jewell, Catherine Mary
(86) International application number: PCT/US2006/024863
(87) International publication number: WO 2007/005388

(56) References cited:
- US-A- 5 747 125
- US-B2- 6 808 557
- TURNER M B ET AL: "Ionic Liquid-Reconstituted Cellulose Composites as Solid Support Matrices for Biocatalyst Immobilization", BIOMACROMOLECULES, ACS, WASHINGTON, DC, US, vol. 6, 29 July 2005 (2005-07-29), pages 2497-2502, XP002478762, ISSN: 1525-7797, DOI: DOI:10.1021/BM050199D [retrieved on 2005-07-29]
- OKUTUCU BURCU ET AL: "Covalent attachment of oligonucleotides to cellulose acetate membranes", ARTIFICIAL CELLS BLOOD SUBSTITUTES AND BIOTECHNOLOGY, vol. 32, no. 4, 2004, pages 599-608, XP009149401,
- DANIELA STÖLLNER ET AL: "Activation of Cellulose Membranes with 1,1'-Carbonyldiimidazole or 1-Cyano-4-dimethylaminopyridinium tetrafluoroborate as a Basis for the Development of Immunosensors", ANALYTICAL BIOCHEMISTRY, vol. 304, no. 2, 1 May 2002 (2002-05-01), pages 157-165, XP55000743, ISSN: 0003-2697, DOI: 10.1006/abio.2001.5603

## Description

This application claims priority to of U.S. Provisional Application No. 60/694,902, filed on June 29, 2005, which is incorporated by reference herein in its entirety.

### FIELD

The subject matter disclosed herein generally relates to cellulose composites and to methods of preparing such composites using ionic liquids. Also disclosed are methods of using the cellulose compositions described herein.

### BACKGROUND

Entrapped materials are substances that have some restriction in their ability to freely move (*e.g*., dissociate, dissolve, or diffuse) in an environment. A few examples of entrapped materials are a bioactive agent encapsulated in a microcapsule, a reactive agent coated onto a substrate, an enzyme covalently attached to a bead, or a macromolecule entangled in a gel or fiber matrix. Having a wide number of uses, such as controlled release systems, structural modifiers, and sensor or reactive materials, entrapped materials and methods for their preparation are an important field of research.

Typically, entrapped materials are formulated as membranes, coatings, or capsules. Current methods for forming such materials include emulsion polymerization, interfacial polymerization, dissolution, emulsification, gelation, spray-drying, vacuum coating, and adsorption onto porous particles. Common materials used in these methods include polymers, hydrocolloids, sugars, waxes, fats, metals, and metal oxides.

For the controlled release of entrapped liquid materials, the use of membranes, coatings, capsules, etc., is well known. For example, controlled-release materials have been used in the preparation of graphic arts materials, pharmaceuticals, food, and pesticide formulations. In agriculture, controlled-release techniques have improved the efficiency of herbicides, insecticides, fungicides, bactericides, and fertilizers. Non-agricultural uses include encapsulated dyes, inks, pharmaceuticals, flavoring agents, and fragrances.

The most common forms of controlled-release materials are coated droplets or microcapsules, coated solids, including both porous and non-porous particles, and coated aggregates of solid particles. In some instances, a water-soluble encapsulating film is desired, which releases the encapsulated material when the capsule is placed in contact with water. Other coatings are designed to release the entrapped material when the capsule is ruptured or degraded by external force. Still further coatings are porous in nature and release the entrapped material to the surrounding medium at a slow rate by diffusion through the pores.

Other materials have been formulated as emulsifiable concentrates by dissolving the materials in an organic solvent mixed with a surface-active agent or as an oily agent. In solid form, insecticides have been formulated as a wettable powder in which the insecticide is adsorbed onto finely powdered mineral matter or diatomaceous earth, as a dust or as granules.

Enzymes and proteins have become popular materials for entrapment. For example, enzyme entrapment on a solid support has been studied extensively as a simple means of protein stabilization and catalyst separation and recovery from reaction systems (Gemeiner, In Enzyme Engineering, Gemeiner, Ed., Ellis Horwood Series in Biochemistry and Biotechnology, Ellis Horwood Limited: West Sussex, England, 1992, pp 158-179; Mulder, Basic Principles of Membrane Technology, Kluwer Academic Publishers: Dordrecht, 1991). Entrapment of enzymes on solid supports can result in improved stability to pH and temperature and aid in separation of the enzyme from the reaction mixture, and also for formation of enzyme electrodes for sensor applications.

There are four principal methods available for immobilizing enzymes and other proteins: adsorption, covalent binding, entrapment, and membrane confinement. Typical materials used for these purposes include silica, polyaniline, acrylics, chitin, and cellulose (Gemeiner, In Enzyme Engineering, Gemeiner, Ed., Ellis Horwood Series in Biochemistry and Biotechnology, Ellis Horwood Limited: West Sussex, England, 1992, pp 158-179; Krajewska, Enz Microb Technol 2004, 35:126-139). Entrapment of enzymes within gels or fibers is typically used in processes involving low molecular weight substrates and products. Entrapment in calcium alginate is also used for immobilization of microbial, animal, and plant cells.

For entrapping proteins and other biomolecules, the use of cellulose, which is hydrophilic and wettable, can be desirable because it helps create a compatible environment as compared to hydrophobic materials (Tiller et al., Biotechnol Appl Biochem 1999, 30:155-162; Sakai, J Membr Sci 1994, 96:91-130). In addition, cellulose is robust, chemically inert under physiological conditions, and non-toxic, all of which are important for protein survival and advantageous for industrial processing. One method for enzyme immobilization uses polysaccharide activation in which cellulose beads are reacted under alkali conditions with cyanogen bromide. The intermediate produced is then covalently coupled with soluble enzymes. Enzymes can also be entrapped in cellulose acetate fibers by formulation of an emulsion of the enzyme plus cellulose acetate in dichloromethane, followed by extrusion of fibers.

In other examples, materials can be entrapped by dissolving and reconstituting cellulose. However, traditional cellulose dissolution processes, including the cuprammonium and xanthate processes, are often cumbersome or expensive and require the use of unusual solvents, typically with a high ionic strength and are used under relatively harsh conditions. (Kirk-Othmer, Encyclopedia of Chemical Technology, Fourth Edition 1993, Vol. 5, p. 476-563.) Such solvents include carbon disulfide, *N*-methylmorpholine-*N*-oxide (NMMNO), mixtures of *N,N-*dimethylacetamide and lithium chloride (DMAC/LiCl), dimethylimidazolone/LiCl, concentrated aqueous inorganic salt solutions (*e.g.,* ZnCl/H₂O, Ca(SCN)₂/H₂O), concentrated mineral acids (*e.g.,* H₂SO₄/H₃PO₄), or molten salt hydrates (*e.g*., LiClO₄·3H₂O, NaSCN/KSCN/LiSCN/H₂O). These cellulose dissolution processes break the cellulose polymer backbone, resulting in regenerated products that contain an average of about 500 to about 600 glucose units per molecule rather than the native larger number of about 1500 or more glucose units per molecule. In addition, processes such as that used in rayon formation proceed *via* xanthate intermediates and tend to leave some residual derivatized (substituent groups bonded to) glucose residues, as in xanthate group-containing cellulose.

U.S. Pat. No. 5,792,399 discloses the use of *N*-methylmorpholine-*N*-oxide (NMMNO) solutions of cellulose to prepare regenerated cellulose that contained polyethyleneimine (PEI). That patent discloses that one should utilize a pre-treatment with the enzyme cellulase to lessen the molecular weight of the cellulose prior to dissolution. In addition, it discloses that NMMNO decomposes at the temperatures used for dissolution to provide *N*-methylmorpholine as a degradation product that could be steam distilled away from the cellulose solution. The presence of PEI is said to lessen the decomposition of the NMMNO.

Other processes that can provide a solubilized cellulose do so by forming a substituent that is intended to remain bonded to the cellulose, such as where cellulose esters like the acetate and butyrate esters are prepared, or where a carboxymethyl, methyl, ethyl, C₂-C₃ 2-hydroxyalkyl (hydroxyethyl or hydroxypropyl), or the like group is added to the cellulose polymer. Such derivative (substituent) formation also usually leads to a lessening of the degree of cellulose polymerization so that the resulting product contains fewer glucose units per molecule than the cellulose from which it was prepared.

Against this background, many formulations of entrapped materials pose a variety of problems, such as the pollution of the environment caused by organic solvents used in the emulsions and by dust resulting from the wettable powders, and the costs associated with the removal of unwanted byproducts. Also, the use of cellulose in such compositions is generally associated with a number of drawbacks, most notably, the need for extensive chemical activation and functionalization necessary in order to attach biomolecules to the surface (Klemm et al., Comprehensive Cellulose Chemistry, Wiley VCH: Chichester, 1998; Vol. 2.; Chesney et al., Green Chem 2000, 2:57-62; Stöllner et al., Anal Biochem 2001, 304:157-165). Methods that involve cellulose solubilization can suffer from a break-down of the cellulose backbone, the requirement of exotic solvents and additional steps, and unwanted derivatization of the cellulose. Furthermore, for these formulations to have long-term residual effectiveness, an amount of entrapped material much higher than that used in normal applications may be required, and this increased amount can affect the environment or cause problems of safety.

Because the preparation of such entrapped materials can be technically difficult and environmentally harmful, there is a strong demand for methodologies that can reduce or simplify the entrapment process. There is also a need for superior formulations that can effectively replace the emulsifiable concentrates, interfacially-polymerized or wettable powders, and are safer to use. Also, the need for processes and formulations that allow for the utilization of cellulosic materials is highly desirable for a formulation that maintains a high degree of efficacy over long periods. Disclosed herein are compositions and methods that meet these and other needs.

### SUMMARY

In accordance with the purposes of the disclosed materials, compounds, compositions, articles, devices, and methods, as embodied and broadly described herein, the disclosed subject matter, in one aspect, relates to compounds and compositions and methods for preparing and using such compounds and compositions. In a further aspect, the disclosed subject matter relates to cellulose/active substance composites. Methods for making the disclosed composites involving the use of ionic liquids are also disclosed. In a still further aspect, the disclosed subject matter relates to articles prepared from the disclosed composites.

Additional advantages will be set forth in part in the description that follows, and in part will be obvious from the description, or may be learned by practice of the aspects described below. The advantages described below will be realized and attained by means of the elements and combinations particularly pointed out in the appended claims. It is to be understood that both the foregoing general description and the following detailed description are exemplary and explanatory only and are not restrictive.

### BRIEF DESCRIPTION OF THE FIGURES

The accompanying figures, which are incorporated in and constitute a part of this specification, illustrate several aspects described below.
Figure 1 is as schematic representation of a cellulose-polyamine film with protruding primary amines.
Figure 2 is a pair of graphs of a Peakfit analysis of the N1s peak from the XPS spectra of B (top) and ionic liquid (IL) reconstituted cellulose (bottom). The blue peak in each panel represents NOx (or imidazolium) groups, red peak represents NH₃ groups, and green peak represents NH₂ groups present on the surface of each film.
Figure 3 is a group of SEM images of cellulose composite materials. Panel A: cellulose-poly-lysine hydrobromide; B: cellulose-BSA; C: cellulose-JEFFAMINE® D-230; D: cellulose-JEFFAMnVE® T-403; E: cellulose-JEFFAMINE® D-2000; F: cellulose-JEFFAMINE®T-5000, G: cellulose-PEI (linear); Ha: cellulose-PEI (branched), smooth portion; Hb: cellulose-PEI (branched), textured portion.
Figure 4 is a pair of microscope images of commercially available Novozym 435 (left) and B-immobilized lipase beads (right). The scale is equivalent to 300 *µ*m in both photos.

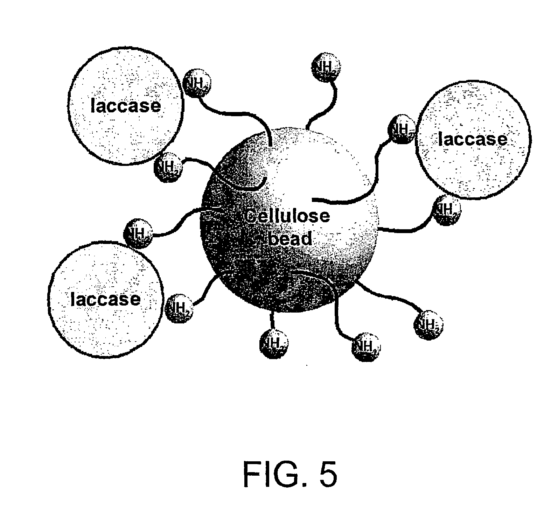

Figure 5 is a schematic representation of a cellulose-polyamine bead with protruding primary amines and an entrapped enzyme (shown as laccase).

### DETAILED DESCRIPTION

The materials, compounds, compositions, articles, devices, and methods described herein may be understood more readily by reference to the following detailed description of specific aspects of the disclosed subject matter and the Examples included therein and to the Figures.

Before the present materials, compounds, compositions, articles, devices, and methods are disclosed and described, it is to be understood that the aspects described below are not limited to specific synthetic methods or specific reagents, as such may, of course, vary. It is also to be understood that the terminology used herein is for the purpose of describing particular aspects only and is not intended to be limiting.

Also, throughout this specification, various publications are referenced. The disclosures of these publications in their entireties are hereby incorporated by reference into this application in order to more fully describe the state of the art to which the disclosed matter pertains. The references disclosed are also individually and specifically incorporated by reference herein for the material contained in them that is discussed in the sentence in which the reference is relied upon.

### General Definifions

In this specification and in the claims that follow, reference will be made to a number of terms, which shall be defined to have the following meanings:

Throughout the description and claims of this specification the word "comprise" and other forms of the word, such as "comprising" and "comprises," means including but not limited to, and is not intended to exclude, for example, other additives, components, integers, or steps.

As used in the description and the appended claims, the singular forms "a," "an," and "the" include plural referents unless the context clearly dictates otherwise. Thus, for example, reference to "a composition" includes mixtures of two or more such compositions, reference to an agent" includes mixtures of two or more such agents, reference to "the component" includes mixtures of two or more such component, and the like.

"Optional" or "optionally" means that the subsequently described event or circumstance can or cannot occur, and that the description includes instances where the event or circumstance occurs and instances where it does not. For example, the phrase "L is an optional linker" means that L may or may not be present in the composite and that the description includes both composites where L is present (e.g., linking a first active substance to a second active substance) and composites where L is not present, in which case the first and second active substances are directly bonded together.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that when a value is disclosed that "less than or equal to" the value, "greater than or equal to the value" and possible ranges between values are also disclosed, as appropriately understood by the skilled artisan. For example, if the value "10" is disclosed, then "less than or equal to 10" as well as "greater than or equal to 10" is also disclosed. It is also understood that throughout the application data are provided in a number of different formats and that this data represent endpoints and starting points and ranges for any combination of the data points. For example, if a particular data point "10" and a particular data point "15" are disclosed, it is understood that greater than, greater than or equal to, less than, less than or equal to, and equal to 10 and 15 are considered disclosed as well as between 10 and 15. It is also understood that each unit between two particular units are also disclosed. For example, if 10 and 15 are disclosed, then 11, 12, 13, and 14 are also disclosed.

References in the specification and concluding claims to parts by weight of a particular element or component in a composition denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent (wt.%) or a component, unless specifically stated to the contrary, is based on the total weight of the formulation or composition in which the component is included.

By "entrapped" or other forms of the word, such as "entrap" or "entrapment," is meant a permanent or temporary restriction in the free movement of a molecule. These terms are not meant to imply a particular mode or method of movement restriction, e.g., an entrapped molecule can be chemically bonded or tethered to a bead, physically encased or entangled in a matrix, ionically or electrostaticly attracted to a particle, entrapped through hydrogen bonding, or magnetically hindered in its free range of movement. Also, these terms are not meant to imply a particular degree movement restriction. For example, an entrapped compound can be only slightly limited in its range of movement or ability to diffuse or it can be substantially hindered in its ability to move. As used herein, entrapped is synonymous with encapsulated, attached, bonded, adhered, adsorbed, absorbed, immobilized, confined, distributed within, embedded, and entangled.

### Chemical Definitions

As used herein, the term "substituted" is contemplated to include all permissible substituents of organic compounds. In a broad aspect, the permissible substituents include acyclic and cyclic, branched and unbranched, carbocyclic and heterocyclic, and aromatic and nonaromatic substituents of organic compounds. Illustrative substituents include, for example, those described below. The permissible substituents can be one or more and the same or different for appropriate organic compounds. For purposes of this disclosure, the heteroatoms, such as nitrogen, can have hydrogen substituents and/or any permissible substituents of organic compounds described herein which satisfy the valencies of the heteroatoms. This disclosure is not intended to be limited in any manner by the permissible substituents of organic compounds. Also, the terms "substitution" or "substituted with" include the implicit proviso that such substitution is in accordance with permitted valence of the substituted atom and the substituent, and that the substitution results in a stable compound, *e.g*., a compound that does not spontaneously undergo transformation such as by rearrangement, cyclization, elimination, etc.

"A¹," "A²," "A³," and "A⁴" are used herein as generic symbols to represent various specific substituents. These symbols can be any substituent, not limited to those disclosed herein, and when they are defined to be certain substituents in one instance, they can, in another instance, be defined as some other substituents.

The term "alkyl" as used herein is a branched or unbranched saturated hydrocarbon group of 1 to 24 carbon atoms, such as methyl, ethyl, n-propyl, isopropyl, n-butyl, isobutyl, t-butyl, pentyl, hexyl, heptyl, octyl, nonyl, decyl, dodecyl, tetradecyl, hexadecyl, eicosyl, tetracosyl, and the like. The alkyl group can also be substituted or unsubstituted. The alkyl group can be substituted with one or more groups including, but not limited to, alkyl, halogenated alkyl, alkoxy, alkenyl, alkynyl, aryl, heteroaryl, aldehyde, amino, carboxylic acid, ester, ether, halide, hydroxy, ketone, nitro, silyl, sulfo-oxo, sulfonyl, sulfone, sulfoxide, or thiol, as described below.

Throughout the specification "alkyl" is generally used to refer to both unsubstituted alkyl groups and substituted alkyl groups; however, substituted alkyl groups are also specifically referred to herein by identifying the specific substituent(s) on the alkyl group. For example, the term "halogenated alkyl" specifically refers to an alkyl group that is substituted with one or more halide, e.g., fluorine, chlorine, bromine, or iodine. The term "alkoxyalkyl" specifically refers to an alkyl group that is substituted with one or more alkoxy groups, as described below. The term "alkylamino" specifically refers to an alkyl group that is substituted with one or more amino groups, as described below, and the like. When "alkyl" is used in one instance and a specific term such as "alkylalcohol" is used in another, it is not meant to imply that the term "alkyl" does not also refer to specific terms such as "alkylalcohol" and the like.

This practice is also used for other groups described herein. That is, while a term such as "cycloalkyl" refers to both unsubstituted and substituted cycloalkyl moieties, the substituted moieties can, in addition, be specifically identified herein; for example, a particular substituted cycloakyl can be referred to as, e.g., an "alkylcycloalkyl." Similarly, a substituted alkoxy can be specifically referred to as, e.g., a "halogenated alkoxy," a particular substituted alkenyl can be, e.g., an "alkenylalcohol," and the like. Again, the practice of using a general term, such as "cycloalkyl," and a specific term, such as "alkylcycloalkyl," is not meant to imply that the general term does not also include the specific term.

The term "alkoxy" as used herein is an alkyl group bound through a single, terminal ether linkage; that is, an "alkoxy" group can be defined as -OA¹ where A¹ is alkyl as defined above.

The term alkoxylalkyl as used herein is an alkyl group that contains an alkoxy substituent and can be defined as -A¹-O-A², where A¹ and A² are alkyl groups.

The term "alkenyl" as used herein is a hydrocarbon group of from 2 to 24 carbon atoms with a structural formula containing at least one carbon-carbon double bond. Asymmetric structures such as (A¹A²)C=C(A³A⁴) are intended to include both the E and Z isomers. This may be presumed in structural formulae herein wherein an asymmetric alkene is present, or it may be explicitly indicated by the bond symbol C=C. The alkenyl group can be substituted with one or more groups including, but not limited to, alkyl, halogenated alkyl, alkoxy, alkenyl, alkynyl, aryl, heteroaryl, aldehyde, amino, carboxylic acid, ester, ether, halide, hydroxy, ketone, nitro, silyl, sulfo-oxo, sulfonyl, sulfone, sulfoxide, or thiol, as described below.

"The term alkynyl" as used herein is a hydrocarbon group of 2 to 24 carbon atoms with a structural formula containing at least one carbon-carbon triple bond. The alkynyl group can be substituted with one or more groups including, but not limited to, alkyl, halogenated alkyl, alkoxy, alkenyl, alkynyl, aryl, heteroaryl, aldehyde, amino, carboxylic acid, ester, ether, halide, hydroxy, ketone, nitro, silyl, sulfo-oxo, sulfonyl, sulfone, sulfoxide, or thiol, as described below.

The term "aryl" as used herein is a group that contains any carbon-based aromatic group including, but not limited to, benzene, naphthalene, phenyl, biphenyl, phenoxybenzene, and the like. The term "aryl" also includes "heteroaryl," which is defined as a group that contains an aromatic group that has at least one heteroatom incorporated within the ring of the aromatic group. Examples of heteroatoms include, but are not limited to, nitrogen, oxygen, sulfur, and phosphorus. Likewise, the term "non-heteroaryl," which is also included in the term "aryl," defines a group that contains an aromatic group that does not contain a heteroatom. The aryl group can be substituted or unsubstituted. The aryl group can be substituted with one or more groups including, but not limited to, alkyl, halogenated alkyl, alkoxy, alkenyl, alkynyl, aryl, heteroaryl, aldehyde, amino, carboxylic acid, ester, ether, halide, hydroxy, ketone, nitro, silyl, sulfo-oxo, sulfonyl, sulfone, sulfoxide, or thiol as described herein. The term "biaryl" is a specific type of aryl group and is included in the definition of aryl. Biaryl refers to two aryl groups that are bound together *via* a fused ring structure, as in naphthalene, or are attached via one or more carbon-carbon bonds, as in biphenyl.

The term "cycloalkyl" as used herein is a non-aromatic carbon-based ring composed of at least three carbon atoms. Examples of cycloalkyl groups include, but are not limited to, cyclopropyl, cyclobutyl, cyclopentyl, cyclohexyl, etc. The term "heterocycloalkyl" is a cycloalkyl group as defined above where at least one of the carbon atoms of the ring is substituted with a heteroatom such as, but not limited to, nitrogen, oxygen, sulfur, or phosphorus. The cycloalkyl group and heterocycloalkyl group can be substituted or unsubstituted. The cycloalkyl group and heterocycloalkyl group can be substituted with one or more groups including, but not limited to, alkyl, alkoxy, alkenyl, alkynyl, aryl, heteroaryl, aldehyde, amino, carboxylic acid, ester, ether, halide, hydroxy, ketone, nitro, silyl, sulfo-oxo, sulfonyl, sulfone, sulfoxide, or thiol as described herein.

The term "cycloalkenyl" as used herein is a non-aromatic carbon-based ring composed of at least three carbon atoms and containing at least one double bound, *i.e.,* C=C. Examples of cycloalkenyl groups include, but are not limited to, cyclopropenyl, cyclobutenyl, cyclopentenyl, cyclopentadienyl, cyclohexenyl, cyclohexadienyl, and the like. The term "heterocycloalkenyl" is a type of cycloalkenyl group as defined above, and is included within the meaning of the term "cycloalkenyl," where at least one of the carbon atoms of the ring is substituted with a heteroatom such as, but not limited to, nitrogen, oxygen, sulfur, or phosphorus. The cycloalkenyl group and heterocycloalkenyl group can be substituted or unsubstituted. The cycloalkenyl group and heterocycloalkenyl group can be substituted with one or more groups including, but not limited to, alkyl, alkoxy, alkenyl, alkynyl, aryl, heteroaryl, aldehyde, amino, carboxylic acid, ester, ether, halide, hydroxy, ketone, nitro, silyl, sulfo-oxo, sulfonyl, sulfone, sulfoxide, or thiol as described herein.

The term "cyclic group" is used herein to refer to either aryl groups, non-aryl groups (i.e., cyloalkyl, heterocycloalkyl, cycloalkenyl, and heterocycloalkenyl groups), or both. Cyclic groups have one or more ring systems that can be substituted or unsubstituted. A cyclic group can contain one or more aryl groups, one or more non-aryl groups, or one or more aryl groups and one or more non-aryl groups.

The term "aldehyde" as used herein is represented by the formula -C(O)H. Throughout this specification "C(O)" is a short hand notation for C=O.

The terms "amine" or "amino" as used herein are represented by the formula NA¹A²A³, where A¹, A², and A³ can be, independently, hydrogen, an alkyl, halogenated alkyl, alkenyl, alkynyl, aryl, heteroaryl, cycloalkyl, cycloalkenyl, heterocycloalkyl, or heterocycloalkenyl group described above.

The term "carboxylic acid" as used herein is represented by the formula -C(O)OH. A "carboxylate" as used herein is represented by the formula -C(O)O⁻.

The term "ester" as used herein is represented by the formula -OC(O)A¹ or -C(O)OA¹, where A¹ can be an alkyl, halogenated alkyl, alkenyl, alkynyl, aryl, heteroaryl, cycloalkyl, cycloalkenyl, heterocycloalkyl, or heterocycloalkenyl group described above.

The term "ether" as used herein is represented by the formula A¹OA², where A¹ and A² can be, independently, an alkyl, halogenated alkyl, alkenyl, alkynyl, aryl, heteroaryl, cycloalkyl, cycloalkenyl, heterocycloalkyl, or heterocycloalkenyl group described above.

The term "ketone" as used herein is represented by the formula A¹C(O)A², where A¹ and A² can be, independently, an alkyl, halogenated alkyl, alkenyl, alkynyl, aryl, heteroaryl, cycloalkyl, cycloalkenyl, heterocycloalkyl, or heterocycloalkenyl group described above.

The term "halide" as used herein refers to the halogens fluorine, chlorine, bromine, and iodine.

The term "hydroxyl" as used herein is represented by the formula -OH.

The term "nitro" as used herein is represented by the formula -NO₂.

The term "silyl" as used herein is represented by the formula -SiA¹A²A³, where A¹, A², and A can be, independently, hydrogen, alkyl, halogenated alkyl, alkoxy, alkenyl, alkynyl, aryl, heteroaryl, cycloalkyl, cycloalkenyl, heterocyloalkyl, or heterocycloalkenyl group described above.

The term "sulfo-oxo" as used herein is represented by the formulas -S(O)A¹, -S(O)₂A¹, -OS(O)₂A¹, or -OS(O)₂OA¹, where A¹ can be hydrogen, an alkyl, halogenated alkyl, alkenyl, alkynyl, aryl, heteroaryl, cycloalkyl, cycloalkenyl, heterocycloalkyl, or heterocycloalkenyl group described above. Throughout this specification "S(O)" is a short hand notation for S=O

The term "sulfonyl" is used herein to refer to the sulfo-oxo group represented by the formula -S(O)₂A¹, where A¹ can be hydrogen, an alkyl, halogenated alkyl, alkenyl, alkynyl, aryl, heteroaryl, cycloalkyl, cycloalkenyl, heterocycloalkyl, or heterocycloalkenyl group described above.

The term "sulfonylamino" or "sulfonamide" as used herein is represented by the formula -S(O)₂NH-.

The term "sulfone" as used herein is represented by the formula A¹S(O)₂A², where A¹ and A² can be, independently, an alkyl, halogenated alkyl, alkenyl, alkynyl, aryl, heteroaryl, cycloalkyl, cycloalkenyl, heterocycloalkyl, or heterocycloalkenyl group described above.

The term "sulfoxide" as used herein is represented by the formula A¹S(O)A², where A¹ and A² can be, independently, an alkyl, halogenated alkyl, alkenyl, alkynyl, aryl, heteroaryl, cycloalkyl, cycloalkenyl, heterocycloalkyl, or heterocycloalkenyl group described above.

The term "thiol" as used herein is represented by the formula -SH.

"R¹," "R²," "R³," "Rⁿ," where n is an integer, as used herein can, independently, possess one or more of the groups listed above. For example, if R¹ is a straight chain alkyl group, one of the hydrogen atoms of the alkyl group can optionally be substituted with a hydroxyl group, an alkoxy group, an alkyl group, a halide, and the like. Depending upon the groups that are selected, a first group can be incorporated within second group or, alternatively, the first group can be pendant (i.e., attached) to the second group. For example, with the phrase "an alkyl group comprising an amino group," the amino group can be incorporated within the backbone of the alkyl group. Alternatively, the amino group can be attached to the backbone of the alkyl group. The nature of the group(s) that is (are) selected will determine if the first group is embedded or attached to the second group.

Unless stated to the contrary, a formula with chemical bonds shown only as solid lines and not as wedges or dashed lines contemplates each possible isomer, *e.g.,* each enantiomer and diastereomer, and a mixture of isomers, such as a racemic or scalemic mixture.

Reference will now be made in detail to specific aspects of the disclosed materials, compounds, compositions, articles, and methods, examples of which are illustrated in the accompanying Examples and Figures.

### Materials and Compositions

Certain materials, compounds, compositions, and components disclosed herein can be obtained commercially or readily synthesized using techniques generally known to those of skill in the art. For example, the starting materials and reagents used in preparing the disclosed compounds and compositions are either available from commercial suppliers such as Aldrich Chemical Co., (Milwaukee, Wis.), Acros Organics (Morris Plains, N.J.), Fisher Scientific (Pittsburgh, Pa.), or Sigma (St. Louis, Mo.) or are prepared by methods known to those skilled in the art following procedures set forth in references such as Fieser and Fieser's Reagents for Organic Synthesis, Volumes 1-17 (John Wiley and Sons, 1991); Rodd's Chemistry of Carbon Compounds, Volumes 1-5 and Supplementals (Elsevier Science Publishers, 1989); Organic Reactions, Volumes 1-40 (John Wiley and Sons, 1991); March's Advanced Organic Chemistry, (John Wiley and Sons, 4th Edition); and Larock's Comprehensive Organic Transformations (VCH Publishers Inc., 1989).

Also, disclosed herein are materials, compounds, compositions, and components that can be used for, can be used in conjunction with, can be used in preparation for, or are products of the disclosed methods and compositions. These and other materials are disclosed herein, and it is understood that when combinations, subsets, interactions, groups, etc. of these materials are disclosed that while specific reference of each various individual and collective combinations and permutation of these compounds may not be explicitly disclosed, each is specifically contemplated and described herein. For example, if a composition is disclosed and a number of modifications that can be made to a number of components of the composition are discussed, each and every combination and permutation that are possible are specifically contemplated unless specifically indicated to the contrary. Thus, if a class of components A, B, and C are disclosed as well as a class of components D, E, and F and an example of a composition A-D is disclosed, then even if each is not individually recited, each is individually and collectively contemplated. Thus, in this example, each of the combinations A-E, A-F, B-D, B-E, B-F, C-D, C-E, and C-F are specifically contemplated and should be considered disclosed from disclosure of A, B, and C; D, E, and F; and the example combination A-D. Likewise, any subset or combination of these is also specifically contemplated and disclosed. Thus, for example, the sub-group of A-E, B-F, and C-E are specifically contemplated and should be considered disclosed from disclosure of A, B, and C; D, E, and F; and the example combination A-D. This concept applies to all aspects of this disclosure including, but not limited to, steps in methods of making and using the disclosed compositions. Thus, if there are a variety of additional steps that can be performed it is understood that each of these additional steps can be performed with any specific aspect or combination of aspects of the disclosed methods, and that each such combination is specifically contemplated and should be considered disclosed.

In one aspect, disclosed herein are cellulose/active substance composites that comprise a regenerated cellulose matrix, a first active substance substantially homogeneously distributed within the matrix of regenerated cellulose, a linker, and a second active substance. In the disclosed composites, the linker can be bonded to the first and second active substances, thus linking them together. In this way, the second active substance can be attached to or associated with the regenerated cellulose. Such composites can have a wide variety of uses, as are described herein. For example, depending on the particular active substances, the disclosed composites can be used in protective clothing, bandages, paper, and any other application where functionalized cellulose is needed or desired.

### Regenerated Cellulose

The regenerated cellulose component of the disclosed composites can be prepared by methods described below. In general, the regenerated cellulose can be prepared by dissolving a starting cellulose in an ionic liquid and then adding to the solution a liquid non-solvent (*i.e*., a liquid that does not substantially dissolve the starting cellulose but is miscible with the ionic liquid). The starting cellulose can be any cellulosic material. Examples of suitable starting cellulose include, but are not limited to, fibrous cellulose, wood pulp, paper, linters, cotton, and the like, including mixtures thereof. This produces regenerated cellulose, which, in many cases, has substantially the same molecular weight as the starting cellulose from which it was prepared. By "substantially the same molecular weight" is meant that the difference in molecular weight between the starting cellulose and the regenerated cellulose is less than about 25%, 20%, 15%, 10%, 5%, 1%, or 0% of the molecular weight of the starting cellulose. Further, the regenerated cellulose can be substantially free of an increased amount of substituent groups relative to the starting cellulose. By "substantially free of an increased amount of substituent groups" is meant that the number of substituent groups on the regenerated cellulose (*e.g*., functionalization of the hydroxyl groups present on cellulose by esterification or alkylation), commonly referred to as the degree of substitution or "D.S.," is less than, equal to, or 0.1, 0.5, 1, 5, 10, 15, 20, 25, 30, or 35% greater than that of the starting cellulose. Also, the regenerated cellulose component of the disclosed composites can be substantially free of entrapped ionic liquid degradation products. By "substantially free of entrapped ionic liquid degradation products" is meant that the regenerated cellulose can contain less than about 25%, less than about 20%, less than about 15%, less than about 10%, less than about 5%, less than about 3%, less than about 2%, less than about 1%, less than about 0.5%, or about 0% by weight of the regenerated cellulose of entrapped ionic liquid degradation products.

### First Active Substance

The first active substance component of the disclosed cellulose/active substance composites can be substantially homogeneously distributed within the matrix of the regenerated cellulose. By "substantially homogeneously" is meant averaged over a volume of regenerated cellulose of at least one cubic inch; on a microscopic scale there can be volumes having a first active substance distributed therein and other volumes within the regenerated cellulose that do not have a first active substance. Suitable methods for distributing or entrapping the first active substance substantially homogeneously within the matrix of the regenerated cellulose are described herein. It is also contemplated that more than one kind of first active substance, as are described herein, can be used in the disclosed composites and methods.

Generally, the first active substance can be any substance that can be distributed within the matrix of regenerated cellulose and that can be coupled (e.g., bonded or attached) to a linker, examples of which are described herein. Coupling the first active substance to the linker can be accomplished by any reaction that can form a bond between the first active substance and the linker. For example, the first active substance can have one or more electrophilic functional groups that can react with one or more nucleophilic functional groups on the linker to form a bond. Alternatively, the first active substance can have one or more nucleophilic functional groups that can react with one or more electrophilic functional groups on the linker to form a bond. By "nucleophilic functional group" is meant any moiety that contains or can be made to contain an electron rich atom; examples of nucleophilic functional groups are disclosed herein. By "electrophilic functional group" is meant any moiety that contains or can be made to contain an electron deficient atom; examples of electrophilic functional groups are also disclosed herein. Specific examples of first active substances, second active substances, and linkers, as well as methods for coupling them together are disclosed herein.

### Nucleophilic functional groups

In a particular example, the first active substance can be a polymeric compound that comprises one or more nucleophilic functional groups, which can react with an electrophilic group on a linker to form a bond. It is understood that when a nucleophilic functional group is reacted with an electrophilic functional group, the nucleophilic functional group may no longer be nucleophilic. In this sense, the disclosed composites can, in some examples, be without a nucleophilic functional group on the first active substance; that is, the nucleophilic functional group has been coupled to an electrophilic functional group on the linker and is no longer nucleophilic or as nucleophilic as before. However, for the purposes of this disclosure, various functional groups are identified by referring to them prior to bond formation. For example, in a composites disclosed herein a first active substance can be referred to as having an amine and a linker can be referred to as having an aldehyde, even though in the disclosed composites, the amine functional group of the first active substance is not present due to having formed a bond with the aldehyde functional group of the linker to result in an imine. This practice is used throughout when referring to active substances and linkers.

Examples of nucleophilic functional groups that can be present on a first active substance include, but are not limited to, an amine, amide, and hydroxyl group. In some aspects, one or more different nucleophilic groups can be present on the first active substance.

### Polymeric amines

In one specific example, the first active substance can be a polymeric amine (*i.e*., a polymer that comprises one or more amine groups). In this instance, the amine acts as a nucleophilic functional group that can react with an electrophilic moiety on the linker (e.g., reacting with an aldehyde or ester to form an imine or amide bond, respectively).

In another example, the polymeric amine can be an amino acid based polymer. As used herein "amino acid" means the typically encountered twenty amino acids which make up polypeptides. In addition, it further includes less typical constituents which are both naturally occurring, such as, but not limited to formylmethionine and selenocysteine, analogs of typically found amino acids, and mimetics of amino acids or amino acid functionalities. Non-limiting examples of these and other molecules are discussed herein.

Suitable amino acid based polymers are "peptides," which are a class of compounds composed of amino acids chemically bound together. In general, the amino acids are chemically bound together via amide linkages (CONH); however, the amino acids may be bound together by other chemical bonds known in the art. For example, the amino acids can be bound by amine linkages. "Peptide" as used herein includes oligomers of amino acids and small and large peptides (e.g., proteins).

It is understood that there are numerous amino acid based polymers that are suitable for use as the first active substance. For example, there are numerous D-amino acids or L-amino acids that have a different functional substituent than the typically encountered amino acids. The opposite stereoisomers of naturally occurring peptides are also suitable, as well as the stereo isomers of peptide analogs. Additionally, the first active substances can be produced to resemble peptides, but which are not connected via a natural peptide linkage. For example, linkages for amino acids or amino acid analogs can include -CH₂NH-, -CH₂S-, -CH₂CH₂-, - CH=CH- (*cis* and *trans*), -COCH₂-, -CH(OH)CH₂₋, and -CH₂SO-. These and others can be found in Spatola, Chemistry and Biochemistry of Amino Acids, Peptides, and Proteins, B. Weinstein, eds., Marcel Dekker, NY, p. 267, 1983; Spatola, Vega Data, Peptide Backbone Modifications Vol. 1, Issue 3, 1983 (general review); Morley, Trends Pharm Sci 1980, 463-68,; Hudson et al., Int JPept Prot Res 1979, 14:177-185 (-CH₂NH-, -CH₂CH₂₇-); Spatola et al., Life Sci 1986, 38:1243-1249 (-CH₂S-); Hann, J Chem Soc Perkin Trans I 1982, 307-314 (-CH=CH-, *cis* and *trans*); Almquist et al., J Med Chem 1980,23:1392-1398 (-C(O)CH₂-); Jennings-White et al., Tetrahedron Lett 1982, 23:2533 (-C(O)CH₂-); Szelke *et al.,* European App. No. EP 45665 CA (-CH(OH)CH₂-); Holladay et al., Tetrahedron Lett 1983, 24:4401-4404 (-C(OH)CH₂-); and Hruby, Life Sci 1982, 31:189-199 (-CH₂S-); each of which is incorporated herein by reference herein for at least their teachings of amino acid analogs. It is understood that peptide analogs can have more than one atom between the bonding amine and acid functionality, such as beta-alanine, gama-aminobutyric acid, and the like. Such analogs are contemplated within the meaning of the terms polymeric amine and peptide.

In addition, the disclosed first active substance can be a derivative or variant of a peptide. Peptide variants and derivatives are well understood to those of skill in the art and can involve amino acid sequence modifications. For example, amino acid sequence modifications typically fall into one or more of three classes: substitutional, insertional, and deletional variants. Insertions include amino and/or carboxyl terminal fusions as well as intrasequence insertions of single or multiple amino acid residues. Deletions are characterized by the removal of one or more amino acid residues from the protein sequence. Substitutions, deletions, insertions, or any combination thereof may be combined to arrive at a final construct.

Also, a suitable first active substance can be a peptide that has certain post-translational derivatizations. For example, acetylation of the *N*-terminal amine or amidation of the C-terminal carboxyl. It is also possible to use peptides and proteins linked to other molecules (e.g., conjugates). For example, carbohydrates (e.g., glycoproteins) can be linked to the protein or peptide. Such derivatives, variants, and analogs of peptides and proteins are contemplated herein within the meaning of the terms polymeric amine, amino acid based polymer, and peptide, and are all suitable for use as the first active substance.

Some specific examples of amino acid based polymers that are suitable for use a first active substance include, but are not limited to, polylysine, proteins (*e.g.,* enzymes), and peptides, including mixture thereof. Some particular examples include, but are not limited to, lactase, haloamine, amylase, propolis, whey protein, dioxychlor, lactoferrin, and Melissa officinalis.

Methods for producing such amino acid based polymers, peptides, and proteins are well known. One method is to link two or more peptides or polypeptides together by protein chemistry techniques. For example, peptides or polypeptides can be chemically synthesized using currently available laboratory equipment using either Fmoc (9-fluorenylmethyloxycarbonyl) or Boc (*tert*-butyloxycarbonyl) chemistry. (Applied Biosystems, Inc., Foster City, CA). One skilled in the art can readily appreciate that a peptide or polypeptide corresponding to the disclosed first active substances can be synthesized by standard chemical reactions. For example, a peptide or polypeptide can be synthesized and not cleaved from its synthesis resin whereas the other fragment of a peptide or protein can be synthesized and subsequently cleaved from the resin, thereby exposing a terminal group which is functionally blocked on the other fragment. By peptide condensation reactions, these two fragments can be covalently joined *via* a peptide bond at their carboxyl and amino termini, respectively, to form an antibody, or fragment thereof. (Grant, Synthetic Peptides: A User Guide. W.H. Freeman and Co., NY, 1992; Bodansky and Trost, Ed. Principles of Peptide Synthesis. Springer-Verlag Inc., NY, 1993, which are incorporated by reference herein at least for material related to peptide synthesis). Alternatively, a peptide or polypeptide first active substance can be independently synthesized *in vivo.*

Once isolated, independent peptides or polypeptides can be linked, if desired, to form a peptide or fragment thereof *via* similar peptide condensation reactions. For example, enzymatic ligation of cloned or synthetic peptide segments allow relatively short peptide fragments to be joined to produce larger peptide fragments, polypeptides or whole protein domains (Abrahmsen et al., Biochemistry 1991, 30:4151, which is incorporated by reference herein at least for its teachings of peptide and protein synthesis). Alternatively, native chemical ligation of synthetic peptides can be utilized to synthetically construct large peptides or polypeptides from shorter peptide fragments. (*See e.g.,* Dawson et al., Science 1994, 266:776-9; Baggiolini et al., FEBS Lett 1992, 307:97-101; Clark-Lewis et al., JBiol Chem 1994, 269:16075; Clark-Lewis et al., Biochemistry 1991, 30:3128; Rajarathnam et al., Biochemistry 1994, 33:6623-6630, which are all incorporated by reference herein at least for their teachings of peptide and protein synthesis). Alternatively, unprotected peptide segments can be chemically linked where the bond formed between the peptide segments as a result of the chemical ligation is an unnatural (non-peptide) bond (Schnolzer et al., Science 1992, 256:221, which is incorporated by reference herein at least for its teachings of peptide and protein synthesis). This technique has been used to synthesize analogs of protein domains as well as large amounts of relatively pure proteins with full biological activity (deLisle Milton et al., Techniques in Protein Chemistry IV. Academic Press, NY, pp. 257-67, 1992, which is incorporated by reference herein at least for its teachings of peptide and protein synthesis). Commercially available amino acid based polymers, peptides, and proteins are also suitable for use as the first active substance in the composites disclosed herein. Further, amino acid based polymers that have been isolated from various systems and subjects can also be used.

Other suitable examples of polymeric amines are olefin based polymers that contain one or more amine functional group. Many such polyamines can be obtained commercially or can be prepared by methods known in the art. Suitable examples of polyamines that can used as a first active substance in the disclosed cellulose/active substance composites include, but are not limited to, polyvinyl amine and polyalkyleneimines like polyethyleneimine.

Still further examples of polymeric amines are polyamides that are prepared by the condensation of a diamine monomer with a diacid or diester monomer. Such polyamides are well known in the art and can be obtained commercially. Alternatively, polyamides can be prepared by self condensation of a monomer containing an amine and an acid or ester functional group, or through a ring opening reaction of a cyclic amide (*i.e*., lactam) such as caprolactam. Nylons are common examples of such polyamides.

Yet another example of a suitable polymeric amine is a polyether amine. Polyether amines contain primary amino groups attached to the terminus of a polyether backbone. The polyether backbone is typically based either on propylene oxide (PO), ethylene oxide (EO), or mixed EO/PO. In one aspect, the polyether amine can be a polyoxyalkyleneamines. Such polyether amines can be obtained commercially from Huntsman Performance Products (Salt Lake City, UT) under the name JEFFAMINE®. JEFFAMINES can have monoamines, diamines, and triamines, and are available in a variety of molecular weights, ranging up to 5,000.

### Other nucleophilic functional group containing polymers

In yet another suitable example of a first active substance comprising a nucleophilic functional group, the first active substance can be a polymeric alcohol (i.e., a polymer that comprises one or more hydroxyl groups). Such hydroxy groups can react with electrophilic groups on a linker to form a bond (e.g., react with a halogen, aldehyde, or ester). A suitable polymeric alcohol is polyvinyl alcohol, which is commercially available or can be prepared by the hydrolysis of polyvinyl acetate.

### Electrophilic functional groups

In another aspect of the disclosed cellulose/active substance composites, the first active substance can be a polymeric compound that comprises one or more electrophilic functional groups that can react with a nucleophilic group on a linker to form a bond. Examples of suitable electrophilic functional groups that can be used include, but are not limited to, ester, aldehyde, annydride, and halogen groups. It is contemplated that one or more different electrophilic groups can be present on the first active substance.

In one example of a first active substance comprising an electrophilic functional group, the first active substance can be a polyester or a polyacid (*i.e*., a polymer that comprises one or more ester or acid groups, respectively). Polyesters and polyacids are well known and can be obtained commercially or by methods known in the art. Suitable examples of polyesters include, but are not limited to, polyalkylene terephthalates. Suitable examples of polymeric acids include, but are not limited to, poly(meth)acrylates and polymaleic acids, including mixtures and copolymers thereof.

### Second active substance

The disclosed cellulose/active substance composites also comprise a second active substance. The second active substance can be linked to the first active substance through a linker. Alternatively, the second active substance can be linked directly to the first active substance. In this way, the disclosed composites have the second active substance associated with or attached to the regenerated cellulose matrix via the first active substance, which is distributed within the regenerated cellulose.

As described above for the first active substance, the second active substance can be any compound that can be coupled (e.g., bonded or attached) to a linker, which are described herein. Coupling the second active substance to the linker can be accomplished by any reaction that can form a bond between the second active substance and the linker. For example, the second active substance can have one or more electrophilic functional groups that can react with one or more nucleophilic functional groups on the linker to form a bond. Alternatively, the second active substance can have one or more nucleophilic functional groups that can react with one or more electrophilic functional groups on the linker to form a bond. Specific examples of first active substances (and second active substances) and linkers, as well as methods for coupling them together are disclosed herein.

Second active substance with nucleophilic functional groups can be any compound described above for the first active substance. For example, the second active substance can be a polymeric amine, an amino acid based polymer, peptide, protein, polyamide, polymeric alcohol, and the like, including mixtures thereof. Such molecules contain nucleophilic amine or alcohol groups that can react with an electrophilic group on a linker. Alternatively, the second active substance can comprise an electrophilic group as described above for the first active substance. For example, the second active can contain an ester or aldehyde or halogen than can react with a nucleophilic group on the linker. Thus, any of the first active substances disclosed herein are suitable as second active substances. Also, m some cases, the second active substance is the same compound as the first active substance. In other cases, the second and first active substances are different compounds.

Further, the second active substance can be any substance whose particular characteristics or properties are desired to be associated with the composite *(i.e., via* the first active substance and linker). In many, though not all cases, the second active substance can have certain desirable biological or chemical properties, which can be evident in the disclosed composites where the second active substance is linked to the first active substance entrapped in the regenerated cellulose matrix. While not wishing to be bound by theory, it is believed that because the second active substance is attached to the first active substance via the linker, it is some distance away from the regenerated cellulose matrix. This can allow the second active substance more freedom of movement, thus facilitating its ability to interact with additional substances.

In certain specific examples, if a cellulose/active substance composite is desired to have antibacterial properties, then a second active substance that is antibacterial can be used. In another example, if the cellulose/active substance composite is desired to have antiviral properties, then a second active substance that is antiviral can be used. It is also possible to used different types (e.g., two or more kinds) of second active substances to impart a variety of properties to the disclosed composites. An example of this is when an antibacterial and an antiviral second active substance are present in the disclosed composites. Also, it is contemplated that the first active substance can also have desired properties (*e.g*., biological or chemical properties) that complement the second active substance.

Some examples of suitable second active substances include, but are not limited to, an antibacterial, an antiviral, herbicide, an insecticide, a fungicide, a microbial cell, a repellent for an animal or insect, a plant growth regulator, a fertilizer, a flavor or odor composition, a catalyst, a photoactive agent, an indicator, a dye, and an UV adsorbent, or a mixture thereof.

In one particular example, the second active substance can be an antibacterial agent. Suitable examples of antibacterial agents include, but are not limited to, Acedapsone; Acetosulfone Sodium; Alamecin; Alexidine; Amdinocillin; Amdinocillin Pivoxil; Amicycline; Amifloxacin; Amifloxacin Mesylate; Amikacin; Amikacin Sulfate; Aminosalicylic acid; Aminosalicylate sodium; Amoxicillin; Amphomycin; Ampicillin; Ampicillin Sodium; Apalcillin Sodium; Apramycin; Aspartocin; Astromicin Sulfate; Avilamycin; Avoparcin; Azithromycin; Azlocillin; Azlocillin Sodium; Bacampicillin Hydrochloride; Bacitracin; Bacitracin Methylene Disalicylate; Bacitracin Zinc; Bambermycins; Benzoylpas Calcium; Berythromycin; Betamicin Sulfate; Biapenem; Biniramycin; Biphenamine Hydrochloride; Bispyrithione Magsulfex; Butikacin; Butirosin Sulfate; Capreomycin Sulfate; Carbadox; Carbenicillin Disodium; Carbenicillin Indanyl Sodium; Carbenicillin Phenyl Sodium; Carbenicillin Potassium; Carumonam Sodium; Cefaclor; Cefadroxil; Cefamandole; Cefamandole Nafate; Cefamandole Sodium; Cefaparole; Cefatrizine; Cefazaflur Sodium; Cefazolin; Cefazolin Sodium; Cefbuperazone; Cefdinir; Cefepime; Cefepime Hydrochloride; Cefetecol; Cefixime; Cefmenoxime Hydrochloride; Cefmetazole; Cefmetazole Sodium; Cefonicid Monosodium; Cefonicid Sodium; Cefoperazone Sodium; Ceforanide; Cefotaxime Sodium; Cefotetan; Cefotetan Disodium; Cefotiam Hydrochloride; Cefoxitin; Cefoxitin Sodium; Cefpimizole; Cefpimizole Sodium; Cefpiramide; Cefpiramide Sodium; Cefpirome Sulfate; Cefpodoxime Proxetil; Cefprozil; Cefroxadine; Cefsulodin Sodium; Ceftazidime; Ceftibuten; Ceftizoxime Sodium; Ceftriaxone Sodium; Cefuroxime; Cefuroxime Axetil; Cefuroxime Pivoxetil; Cefuroxime Sodium; Cephacetrile Sodium; Cephalexin; Cephalexin Hydrochloride; Cephaloglycin; Cephaloridine; Cephalothin Sodium; Cephapirin Sodium; Cephradine; Cetocycline Hydrochloride; Cetophenicol; Chloramphenicol; Chloramphenicol Palmitate; Chloramphenicol Pantothenate Complex; Chloramphenicol Sodium Succinate; Chlorhexidine Phosphanilate; Chloroxylenol; Chlortetracycline Bisulfate; Chlortetracycline Hydrochloride; Cinoxacin; Ciprofloxacin; Ciprofloxacin Hydrochloride; Cirolemycin; Clarithromycin; Clinafloxacin Hydrochloride; Clindamycin; Clindamycin Hydrochloride; Clindamycin Palmitate Hydrochloride; Clindamycin Phosphate; Clofazimine; Cloxacillin Benzathine; Cloxacillin Sodium; Cloxyquin; Colistimethate Sodium; Colistin Sulfate; Coumermycin; Coumermycin Sodium; Cyclacillin; Cycloserine; Dalfopristin; Dapsone; Daptomycin; Demeclocycline; Demeclocycline Hydrochloride; Demecycline; Denofungin; Diaveridine; Dicloxacillin; Dicloxacillin Sodium; Dihydrostreptomycin Sulfate; Dipyrithione; Dirithromycin; Doxycycline; Doxycycline Calcium; Doxycycline Fosfatex; Doxycycline Hyclate; Droxacin Sodium; Enoxacin; Epicillin; Epitetracycline Hydrochloride; Erythromycin; Erythromycin Acistrate; Erythromycin Estolate; Erythromycin Ethylsuccinate; Erythromycin Gluceptate; Erythromycin Lactobionate; Erythromycin Propionate; Erythromycin Stearate; Ethambutol Hydrochloride; Ethionamide; Fleroxacin; Floxacillin; Fludalanine; Flumequine; Fosfomycin; Fosfomycin Tromethamine; Fumoxicillin; Furazolium Chloride; Furazolium Tartrate; Fusidate Sodium; Fusidic Acid; Gentamicin Sulfate; Gloximonam; Gramicidin; Haloprogin; Hetacillin; Hetacillin Potassium; Hexedine; Ibafloxacin; Imipenem; Isoconazole; Isepamicin; Isoniazid; Josamycin; Kanamycin Sulfate; Kitasamycin; Levofuraltadone; Levopropylcillin Potassium; Lexithromycin; Lincomycin; Lincomycin Hydrochloride; Lomefloxacin; Lomefloxacin Hydrochloride; Lomefloxacin Mesylate; Loracarbef; Mafenide; Meclocycline; Meclocycline Sulfosalicylate; Megalomicin Potassium Phosphate, Moquidox; Meropenem; Methacycline; Methacycline Hydrochloride; Methenamine; Methenamine Hippurate; Methenamine Mandelate; Methicillin Sodium; Metioprim; Metronidazole Hydrochloride; Metronidazole Phosphate; Mezlocillin; Mezlocillin Sodium; Minocycline; Minocycline Hydrochloride; Mirincamycin Hydrochloride; Monensin; Monensin Sodiumr; Nafcillin Sodium; Nalidixate Sodium; Nalidixic Acid; Natainycin; Nebramycin; Neomycin Palmitate; Neomycin Sulfate; Neomycin Undecylenate; Netilmicin Sulfate; Neutramycin; Nifuiradene; Nifuraldezone; Nifuratel; Nifuratrone; Nifurdazil; Nifurimide; Nifiupirinol; Nifurquinazol; Nifurthiazole; Nitrocycline; Nitrofurantoin; Nitromide; Norfloxacin; Novobiocin Sodium; Ofloxacin; Onnetoprim; Oxacillin Sodium; Oximonam; Oximonam Sodium; Oxolinic Acid; Oxytetracycline; Oxytetracycline Calcium; Oxytetracycline Hydrochloride; Paldimycin; Parachlorophenol; Paulomycin; Pefloxacin; Pefloxacin Mesylate; Penamecillin; Penicillin G Benzathine; Penicillin G Potassium; Penicillin G Procaine; Penicillin G Sodium; Penicillin V; Penicillin V Benzathine; Penicillin V Hydrabamine; Penicillin V Potassium; Pentizidone Sodium; Phenyl Aminosalicylate; Piperacillin Sodium; Pirbenicillin Sodium; Piridicillin Sodium; Pirlimycin Hydrochloride; Pivampicillin Hydrochloride; Pivampicillin Pamoate; Pivampicillin Probenate; Polymyxin B Sulfate; Porfiromycin; Propikacin; Pyrazinamide; Pyrithione Zinc; Quindecamine Acetate; Quinupristin; Racephenicol; Ramoplanin; Ranimycin; Relomycin; Repromicin; Rifabutin; Rifametane; Rifamexil; Rifamide; Rifampin; Rifapentine; Rifaximin; Rolitetracycline; Rolitetracycline Nitrate; Rosaramicin; Rosaramicin Butyrate; Rosaramicin Propionate; Rosaramicin Sodium Phosphate; Rosaramicin Stearate; Rosoxacin; Roxarsone; Roxithromycin; Sancycline; Sanfetrinem Sodium; Sarmoxicillin; Sarpicillin; Scopafungin; Sisomicin; Sisomicin Sulfate; Sparfloxacin; Spectinomycin Hydrochloride; Spiramycin; Stallimycin Hydrochloride; Steffimycin; Streptomycin Sulfate; Streptonicozid; Sulfabenz; Sulfabenzamide; Sulfacetamide; Sulfacetamide Sodium; Sulfacytine; Sulfadiazine; Sulfadiazine Sodium; Sulfadoxine; Sulfalene; Sulfamerazine; Sulfameter; Sulfamethazine; Sulfamethizole; Sulfamethoxazole; Sulfamonomethoxine; Sulfamoxole; Sulfanilate Zinc; Sulfanitran; Sulfasalazine; Sulfasomizole; Sulfathiazole; Sulfazamet; Sulfisoxazole; Sulfisoxazole Acetyl; Sulfisboxazole Diolamine; Sulfomyxin; Sulopenem; Sultamricillin; Suncillin Sodium; Talampicillin Hydrochloride; Teicoplanin; Temafloxacin Hydrochloride; Temocillin; Tetracycline; Tetracycline Hydrochloride ; Tetracycline Phosphate Complex; Tetroxoprim; Thiamphenicol; Thiphencillin Potassium; Ticarcillin Cresyl Sodium; Ticarcillin Disodium; Ticarcillin Monosodium; Ticlatone; Tiodonium Chloride; Tobramycin; Tobramycin Sulfate; Tosufloxacin; Trimethoprim; Trimethoprim Sulfate; Trisulfapyrimidines; Troleandomycin, Trospectomycin Sulfate; Tyrothricin; Vancomycin; Vancomycin Hydrochloride; Virginiamycin; Zorbamycin.

In another particular example, the second active substance can be an antiviral agent. Suitable examples of antiviral agents include, but are not limited to, Acemannan; Acyclovir; Acyclovir Sodium; Adefovir; Alovudine; Alvircept Sudotox; Amantadine Hydrochloride; Aranotin; Arildone; Atevirdine Mesylate; Avridine; Cidofovir; Cipamfylline; Cytarabine Hydrochloride; Delavirdine Mesylate; Desciclovir; Didanosine; Disoxaril; Edoxudine; Enviradene; Enviroxime; Famciclovir; Famotine Hydrochloride; Fiacitabine; Fialuridine; Fosarilate; Foscarnet Sodium; Fosfonet Sodium; Ganciclovir; Ganciclovir Sodium; Idoxuridine; Kethoxal; Lamivudine; Lobucavir; Memotine Hydrochloride; Methisazone; Nevirapine; Penciclovir; Pirodavir; Ribavirin; Rimantadine Hydrochloride; Saquinavir Mesylate; Somantadine Hydrochloride; Sorivudine; Statolon; Stavudine; Tilorone Hydrochloride; Trifluridine; Valacyclovir Hydrochloride; Vidarabine; Vidarabine Phosphate; Vidarabine Sodium Phosphate; Viroxime; Zalcitabine; Zidovudine; Zinviroxime.

In still other particular examples, the second active substance can be a chemically or biologically specific neutralizing agent. For example, agents that can react with, scavenge, and/or neutralize chemical agents such as nerve gas or superoxide radicals are suitable. An example of such a neutralizing agent is a polyoxometallate, superoxide dismutase, ascorbic acid, and gluathione. Also agents that can deactivate biological agents (*e.g*., anthrax) can be used.

In further examples, the second active substance can be a biomolecule. Examples of biomolecules include, but are not limited to, a small molecule (*e.g*., a ligand, a drug, a lipid, a carbohydrate, a steroid, a hormone, a vitamin, etc.), a nucleic acid (e.g., an oligonucleotide, DNA, RNA, a primer, a probe, a ribozyme, etc.), a peptide, a protein, an enzyme (e.g., a kinase, a phosphatase, a methylating agent, a protease, a transcriptase, an endonuclease, a ligase, etc.), or an antibody and/or fragment thereof. "Small molecule" as used herein, is meant to refer to a composition, which has a molecular weight of less than about 5 kD, for example, less than about 4 kD. Small molecules can be nucleic acids (e.g., DNA, RNA), peptides, polypeptides, peptidomimetics, carbohydrates, lipids, factors, cofactors, hormones, vitamins, steroids, trace elements, pharmaceutical drugs, or other organic (carbon containing) or inorganic molecules.

A cellulose/active substance composite where the second active substance is an antibody can be used, for example, as a filter for isolating specific antigens. Thus, in one instance, the second active substance can comprise an antibody or fragment thereof. The term "antibody" is used herein in a broad sense and includes both polyclonal and monoclonal antibodies. In addition to intact immunoglobulin molecules, also included in the term "antibody" are fragments of immunoglobulin molecules and multimers of immunoglobulin molecules (*e.g.,* diabodies, triabodies, and bi-specific and tri-specific antibodies, as are known in the art; *see, e.g.,* Hudson and Kortt, J Immunol Methods 1999, 231:177-189), fusion proteins containing an antibody or antibody fragment, which are produced using standard molecular biology techniques, single chain antibodies, and human or humanized versions of immunoglobulin molecules or fragments thereof.

Antibodies useful in the disclosed composites can be purchased from commercial sources, such as Chemicon International (Temecula, CA). Antibodies can also be generated using well-known methods *(see* Harlow and Lane. Antibodies, A Laboratory Manual, Cold Spring Harbor Publications, New York, 1988). The skilled artisan will understand that either full-length antigens or fragments thereof can be used to generate the antibodies suitable for use in the disclosed composites. A polypeptide to be used for generating a suitable antibody can be partially or fully purified from a natural source, or can be produced using recombinant DNA techniques. For example, for antigens that are peptides or polypeptides, a cDNA encoding an antigen, or a fragment thereof, can be expressed in prokaryotic cells (e.g., bacteria) or eukaryotic cells *(e.g.,* yeast, insect, or mammalian cells), after which the recombinant protein can be purified and used to generate a monoclonal or polyclonal antibody preparation that specifically binds the targeted antigen.

One of skill in the art will know how to choose an antigenic peptide for the generation of monoclonal or polyclonal antibodies that specifically bind the appropriate antigens. Antigenic peptides for use in generating the antibodies of the disclosed conjugates and methods are chosen from non-helical regions of the protein that are hydrophilic. The PredictProtein Server (http://www.embl-heidelberg.de/predictprotein/subunitdef.html) or an analogous program can be used to select antigenic peptides to generate the antibodies of the disclosed conjugates and methods. In one example, a peptide of about fifteen amino acids can be chosen and a peptide-antibody package can be obtained from a commercial source such as AnaSpec, Inc. (San Jose, CA). One of skill in the art will know that the generation of two or more different sets of monoclonal or polyclonal antibodies maximizes the likelihood of obtaining an antibody with the specificity and affinity required for its intended use. The antibodies can be tested for their desired activity by known methods (e.g., but not limited to, ELISA and/or immunocytochemistry). For additional guidance regarding the generation and testing of antibodies, *see e.g.,* Harlow and Lane, Antibodies: A Laboratory Manual, Cold Spring Harbor Laboratory Press, Cold Spring Harbor, NY, 1988, which is incorporated by reference herein at least for methods of making antibodies.

In other aspects, the second active substance can be a nucleic acid based compound. Thus, as used herein, "nucleic acid" means a molecule made up of, for example, nucleotides, nucleotide analogs, or nucleotide substitutes. Non-limiting examples of these and other molecules are discussed herein. A nucleic acid can be double stranded or single stranded. Nucleic acid is also meant to include oliognucleotides. Any nucleic acid molecule that can be bonded to the linker, and thus the first active substance and regenerated cellulose can be used herein.

The term "nucleotide" means a molecule that contains a base moiety, a sugar moiety and a phosphate moiety. Nucleotides can be linked together through their phosphate moieties and sugar moieties creating an internucleoside linkage. The base moiety of a nucleotide can be adenine-9-yl (A), cytosine-1-yl (C), guanine-9-yl (G), uracil-1-yl (U), and thymin-1-yl (T). The sugar moiety of a nucleotide is a ribose or a deoxyribose. The phosphate moiety of a nucleotide is pentavalent phosphate. A non-limiting example of a nucleotide would be 3'-AMP (3'-adenosine monophosphate) or 5'-GMP (5'-guanosine monophosphate). "Nucleotide analog," as used herein, is a nucleotide which contains some type of modification to either the base, sugar, or phosphate moieties. Modifications to nucleotides are well known in the art and would include for example, 5-methylcytosine (5-me-C), 5-hydroxymethyl cytosine, xanthine, hypoxanthine, and 2-aminoadenine as well as modifications at the sugar or phosphate moieties. "Nucleotide substitutes," as used herein, are molecules having similar functional properties to nucleotides, but which do not contain a phosphate moiety, such as peptide nucleic acid (PNA). Nucleotide substitutes are molecules that will recognize nucleic acids in a Watson-Crick or Hoogsteen manner, but which are linked together through a moiety other than a phosphate moiety. Nucleotide substitutes are able to conform to a double helix type structure when interacting with the appropriate target nucleic acid.

It is also possible to link other types of molecules to nucleotides or nucleotide analogs to make conjugates. Conjugates can be chemically linked to the nucleotide or nucleotide analogs. Such conjugates include but are not limited to lipid moieties such as a cholesterol moiety (Letsinger et al., Proc Natl Acad Sci USA 1989, 86:6553-6, which is incorporated by reference herein at least for its teachings of nucleic acid conjugates). As used herein, the term nucleic acid includes such conjugates, analogs, and variants of nucleic acids.

Nucleic acids, such as those described herein, can be made using standard chemical synthetic methods or can be produced using enzymatic methods or any other known method. Such methods can range from standard enzymatic digestion followed by nucleotide fragment isolation (see for example, Sambrook et al., Molecular Cloning: A Laboratory Manual, 3d Edition (Cold Spring Harbor Laboratory Press, Cold Spring Harbor, N.Y., 2001, Chapters 5, 6) to purely synthetic methods, for example, by the cyanoethyl phosphoramidite method using a Milligen or Beckman System 1Plus DNA synthesizer (for example, Model 8700 automated synthesizer of Milligen-Biosearch, Burlington, MA or ABI Model 380B). Synthetic methods useful for making oligonucleotides are also described by Ikuta et al., Ann Rev Biochem 1984, 53:323-56 (phosphotriester and phosphite-triester methods), and Narang, et al., Methods Enzymol 1980, 65:610-20 (phosphotriester method). Protein nucleic acid molecules can be made using known methods such as those described by Nielsen et al., Bioconjug Chem 1994, 5:3-7.

"Aptamers" are nucleic acid molecules that can interact with a target molecule. These are also suitable for use as the second active substance. Typically aptamers are small nucleic acids ranging from 15-50 bases in length that fold into defined secondary and tertiary structures, such as stem-loops or G-quartets. Aptamers can bind small molecules, such as ATP (U.S. Patent No. 5,631,146) and theophiline (U.S. Patent No. 5,580,737), as well as large molecules, such as reverse transcriptase (U.S. Patent No. 5,786,462) and thrombin (U.S. Patent No. 5,543,293). Representative examples of how to make and use aptamers to bind a variety of different target molecules can be found in the following non-limiting list of U.S. Patents: 5,476,766, 5,503,978, 5,631,146, 5,731,424, 5,780,228, 5,792,613, 5,795,721, 5,846,713, 5,858,660, 5,861,254, 5,864,026, 5,869,641, 5,958,691, 6,001,988, 6,011,020, 6,013,443, 6,020,130, 6,028,186, 6,030,776, and 6,051,698, which are incorporated by reference herein for at least their teachings of aptamers.

Further nucleic acid molecules include "ribozymes," which are nucleic acid molecules that are capable of catalyzing a chemical reaction, either intramolecularly or intermolecularly. Ribozymes are thus catalytic nucleic acids. There are a number of different types of ribozymes that catalyze nuclease or nucleic acid polymerase type reactions which are based on ribozymes found in natural systems, such as hammerhead ribozymes, (for example, but not limited to the following U.S. Patents: 5,334,711, 5,436,330, 5,616,466, 5,633,133, 5,646,020, 5,652,094, 5,712,384, 5,770,715, 5,856,463, 5,861,288, 5,891,683, 5,891,684, 5,985,621, 5,989,908, 5,998,193, 5,998,203, WO 9858058 by Ludwig and Sproat, WO 9858057 by Ludwig and Sproat, and WO 9718312 by Ludwig and Sproat) hairpin ribozymes (for example, but not limited to the following U.S. Patent Nos.: 5,631,115, 5,646,031, 5,683,902, 5,712,384, 5,856,188, 5,866,701, 5,869,339, and 6,022,962), and tetrahymena ribozymes (for example, but not limited to the following U.S. Patents: 5,595,873 and 5,652,107). There are also a number of ribozymes that are not found in natural systems, but which have been engineered to catalyze specific reactions *de novo* (for example, but not limited to the following U.S. Patents: 5,580,967, 5,688,670, 5,807,718, and 5,910,408). Ribozymes typically cleave nucleic acid substrates through recognition and binding of the target substrate with subsequent cleavage. This recognition is often based mostly on canonical or non-canonical base pair interactions. This property makes ribozymes particularly good candidates for target specific cleavage of nucleic acids because recognition of the target substrate is based on the target substrates sequence. Representative examples of how to make and use ribozymes to catalyze a variety of different reactions can be found in the following non-limiting list of U.S. Patents: 5,646,042, 5,693,535, 5,731,295, 5,811,300, 5,837,855, 5,869,253, 5,877,021, 5,877,022, 5,972,699, 5,972,704, 5,989,906, and 6,017,756.

### Linker

The linker component of the disclosed cellulose/active substance composites can be any compound that can form a bond to the first and second active substances, linking them together. Thus a linker typically contains at least two functional groups, e.g., one functional group that can be used to form a bond with the first active substance and another functional group that can be used to form a bond with the second active substance. Typically, though not necessarily, the functional group on the linker that is used to form a bond with the first active substance is at one end of the linker and the functional group that is used to form a bond with the second active substance is at the other end of the linker.

In some aspects, the linker can comprise nucleophilic functional groups that can react with electrophilic functional groups on the first and second active substances, forming a bond. Alternatively, the linker can comprise electrophilic functional groups that can react with nucleophilic functional groups on the first and second active substances, forming a bond. Still further, the linker can comprise nucleophilic and electrophilic functional groups that can react with electrophilic and nucleophilic functional groups on the first and second active substances forming a bond. The various arrangements are illustrated in the following table.

| Functional Group on the First Active Substance | Functional Groups on the Linker | Functional Groups on the Second Active Substance |
|---|---|---|
| Nucleophilic | Electrophilic and Electrophilic | Nucleophilic |
| Nucleophilic | Electrophilic and Nucleophilic | Electrophilic |
| Electrophilic | Nucleophilic and Electrophilic | Nucleophilic |
| Electrophilic | Nucleophilic and Nucleophilic | Electrophilic |

While the disclosed first and second active substances can be attached to each other directly, the use of a linker, as is described herein, can allow more distance (and thus more freedom to move) between the second active substance and the first active substance embedded in the regenerated cellulose. The attachment can be *via* a covalent bond by reaction methods known in the art. When the first and second active substances are attached *via* the linker, the first active substance can be first coupled to the linker, which is then attached to the second active substance. Alternatively, the linker can be first coupled to the second active substance and then be attached to the first active substance.

The linker can be of varying lengths, such as from 1 to 20 atoms in length. For example, the linker can be from 1, 2, 3, 4, 5, 6, 7, 8, 9, 10, 11, 12, 13, 14, 15, 16, 17, 18, 19, or 20 atoms in length, where any of the stated values can form an upper and/or lower end point where appropriate. As noted, the longer the linker, the greater freedom of movement the second active substance can have. Further, the linker can be substituted or unsubstituted. When substituted, the linker can contain substituents attached to the backbone of the linker or substituents embedded in the backbone of the linker. For example, an amine substituted linker can contain an amine group attached to the backbone of the linker or a nitrogen in the backbone of the linker. Suitable moieties for the linker include, but are not limited to, substituted or unsubstituted, branched or unbranched, alkyl, alkenyl, or alkynyl groups, ethers, esters, polyethers, polyesters, polyalkylenes, polyamines, heteroatom substituted alkyl, alkenyl, or alkynyl groups, cycloalkyl groups, cycloalkenyl groups, heterocycloalkyl groups, heterocycloalkenyl groups, and the like, and derivatives thereof.

In one aspect, the linker can comprise a C₁-C₆ branched or straight-chain alkyl, such as methyl, ethyl, *n*-propyl, *iso*-propyl, *n*-butyl, *iso*-butyl, *sec*-butyl, *tert*-butyl, *n*-pentyl, *iso*-pentyl, neopentyl; or hexyl. In a specific example, the linker can comprise -(CH₂)ₙ-, wherein n is from 1 to 5. In another aspect, the linker can comprise a C₁-C₆ branched or straight-chain alkoxy such as a methoxy, ethoxy, n-propoxy, *iso*-propoxy, *n*-butoxy, *iso*-butoxy, sec-butoxy, *tert*-butoxy, *n*-pent oxy, *iso*-pentoxy, neopentoxy, or hexoxy.

In still another aspect, the linker can comprise a C₂-C₆ branched or straight-chain alkyl, wherein one or more of the carbon atoms is substituted with oxygen (e.g., an ether) or an amino group. For example, suitable linkers can include, but are not limited to, a methoxymethyl, methoxyethyl, methoxypropyl, methoxybutyl, ethoxymethyl, ethoxyethyl, ethoxypropyl, propoxymethyl, propoxyethyl, methylaminomethyl, methylaminoethyl, methylaminopropyl, methylaminobutyl, ethylaminomethyl, ethylaminoethyl, ethylaminopropyl, propylaminomethyl, propylaminoethyl, methoxymethoxymethyl, ethoxymethoxymethyl, methoxyethoxymethyl, methoxymethoxyethyl, and the like, and derivatives thereof. In one specific example, the linker can comprise a methoxymethyl (*i.e.,* -CH₂-O-CH₂-).

The reaction between the linker moiety and the first and second active substances results in a chemical bond that links the second active substance to the first active substance, which is embedded within the regenerated cellulose matrix. As noted previously, such reactions can occur as a result of a direct nucleophilic or electrophilic interaction between the linker and the first and/or second active substance. For example, a linker comprising a nucleophilic functional group can directly react with an electrophilic substituent on a first and/or second active substance and form a bond that links the linker to the active substance. Alternatively, an electrophilic substituent on the linker can directly react with a nucleophilic functional group on a first and/or second active substance and form a bond that links the linker to the active substance. Also, the first and/or second active substance can be covalently attached to the linker by an indirect interaction where a reagent initiates, mediates, or facilitates the reaction between the linker and the active substance. For example, the bond-forming reaction between the linker and a first and/or second active substance can be facilitated by the use of a coupling reagent (e.g., carbodiimides, which are used in carbodiimide-mediated couplings) or enzymes (*e.g.,* glutamine transferase).

Suitable linkers are readily commercially available and/or can be synthesized by those of ordinary skill in the art. And the particular linker that can be used in the disclosed composites can be chosen by one of ordinary skill in the art based on factors such as cost, convenience, availability, compatibility with various reaction conditions, the type of first and/or second active substance with which the linker is to interact, and the like.

### Electrophilic Linkers and Nucleophilic Active Substituents

An active substance can be coupled to a linker that can directly or indirectly react with a nucleophilic substituent on the active substance and form a chemical bond. Examples of such nucleophilic substituents that can react with and form a bond to an electrophilic linker include, but are not limited to, proteins, peptides, or receptors that possess amino acid residues with a nucleophilic or potentially nucleophilic amine, carboxylate or carboxylic acid, alcohol, or thiol functional group (e.g., cysteine, serine, threonine, tryptophan, tyrosine, aspartic acid, glutamic acid, glutamine, arginine, histidine, and lysine). Other examples of nucleophilic substituents include, but are not limited to, carbohydrates, polysaccharides, lipids, saturated and unsaturated fatty acids, sphingolipids, or cholesterols that possess a nucleophilic or potentially nucleophilic amine, carboxylate, alcohol, or thiol functional group. These and other examples are disclosed herein.

Further, it is contemplated that more than one type of nucleophilic substituent can be present on an active substance and, as such, they can be selectively reacted with the linker. For example, a peptide active substance with both nucleophilic amine and carboxylate functional groups can be treated with alkylating agents to block the amine functional groups and leave the carboxylate groups available to react with the linker. Conversely, by controlling the reaction conditions (*e.g.,* temperature and concentration) the more reactive amine group can be selectively reacted with the linker moiety and leave the less reactive carboxylate groups mostly unreacted.

When the active substance to be attached to the linker comprises nucleophilic substituents such as those listed above the linker can comprise an electrophilic or potentially electrophilic functional group. Examples of such electrophilic functional groups on a linker include, but are not limited to, aldehydes, acyl derivatives (e.g., acyl azides, acyl nitriles), esters and activated esters (e.g., succinimidyl esters, sulfosuccinimidyl esters), anhydrides and mixed anhydrides, derivatized carboxylic acids and carboxylates, imines, isocyanates, isothiocyanates, sulfonyl chlorides, organo-halides, and maleimides. These moieties are well known in the art of organic chemistry.

Some specific examples of suitable electrophilic linkers include dialdehydes and diesters. Examples of suitable dialdehydes include, but are not limited to, gluteraldehyde, glyoxal, methylglyoxal, dimethyl-glyoxal, malonic dialdehyde, succinic dialdehyde, adipic dialdehyde, 2-hydroxyadipic dialdehyde, pimelic dialdehyde, suberic dialdehyde, azelaic dialdehyde, sebacic dialdehyde, maleic aldehyde, fumaric aldehyde, 1,3-benzenedialdehyde, phthalaldehyde, isophthalaldehyde, terephthalaldehyde, 1,4-diformylcyclohexane, and the like. Equivalents of dialaldehydes that can be used instead of a dialdehyde include, 2,5-dialkoxytetrahydrofurans, 1,4-dialdehyde monoacetals, 1,4-dialdehyde diacetals. Examples of diesters include, but are not limited to, dialkyl oxylate, dialkyl fumarate, dialkyl malonate, dialkyl succinate, dialkyl adipate, dialkyl azelates, dialkyl suberate, dialkyl sebacate, dialkyl terephthalate, dialkylisophthalate, dialkylphthalate, and the like.

Also, when a linker is not generally reactive it can be converted into a more reactive linker. For example, linkers that contain carboxylate or carboxylic acid groups may, depending on the conditions, be slow to react with a nucleophilic substituent on an active substance. However, these linkers can be converted into more reactive, activated esters by a carbodiimide coupling with a suitable alcohol, e.g., 4-sulfo-2,3,5,6-tetrafluorophenol, *N*-hydroxysuccinimide or *N*-hydroxysulfosuccinimide. This results in a more reactive, water-soluble activated ester linking moiety. Various other activating reagents that can be used for the coupling reaction include, but are not limited to, 1-ethyl-3-(3-dimethylaminopropyl) carbodiimide (EDC), dicyclohexylcarbodiimide (DCC), *N,N'*-diisopropyl-carbodiimide (DIP), benzotriazol-1-yl-oxy-tris-(dimethylamino)phosphonium hexa-fluorophosphate (BOP), hydroxybenzotriazole (HOBt), and *N*-methylmorpholine (NMM), including mixtures thereof).

When an active substance contains an amine functional group (*e.g.,* a polymeric amine as disclosed herein) it can be particularly reactive toward linkers with electrophilic functional groups. Such amine containing active substances can react with the linker and form, for example, depending on the linker's functional groups, amine, amide, carboxamide, sulfonamide, urea, or thiourea bonds. When the nucleophilic functional group on the active substance contains a carboxylate, they can react with the linker and form, for example, depending on the linker's functional groups, esters, thioesters; carbonates, or mixed anhydrides. When the nucleophilic functional group on the active substance contains an alcohol or thiol, they can react with the linker's functional group and form, for example, esters, thioesters, ethers, sulfides, disulfides, carbonates, or urethanes.

The kinetics of such reactions depends on the reactivity and concentration of both the linker and the nucleophilic functional group on the first and second active substances. Also, significant factors affecting the reactivity of an active substance with an amine functional group are the amine's class and basicity. For example, many proteins have lysine residues, and most have a free amine at the *N*-terminus. Aliphatic amines, such as the amino group of lysine, are moderately basic and reactive with most electrophilic linkers. However, the concentration of the free base form of aliphatic amines below pH 8 is low; thus, the kinetics of a reaction between an aliphatic amine on an active substance and, for example, an isothiocyanates or succinimidyl ester linker moiety can be strongly pH dependent. While a pH of 8.5 to 9.5 is most efficient for attaching a linker with an electrophilic group to an active substance containing a lysine residue, there will be some reactivity at pH 7 to pH 8. In contrast, the amino group at the *N*-terminus of a proteinaceous active substance usually has a pKa of about 7, so it can sometimes be selectively modified by reaction at near neutral pH.

As noted above, the nucleophilic substituents on an active substance can react directly or indirectly with an electrophilic linker. For example, nucleophilic substituents can react with isocyanate linkers. Isocyanate linkers are readily derivable from acyl azide linkers, and they react with active substances that contain amine functional groups to form ureas, they react with active substances that contain alcohols to form urethanes, and they react with active substances that contain thiols to form thiourethanes.

Isothiocyanate linkers are an alternative to isocyanates and are moderately reactive but quite stable in water. Isothiocyanate linkers will react with an amine, alcohol, or thiol containing cell-surface substituents to form thioureas and thiourethanes.

Succinimidyl ester linkers can also react with active substances that contain amine, carboxylate, alcohol, or thiol functional groups. Succinimidyl ester linkers are particularly reactive towards amines, where the resulting amide bond that is formed is as stable as a peptide bond. However, some succinimidyl ester linkers may not be compatible with a specific application because they can be quite insoluble in aqueous solution. To overcome this limitation, sulfosuccinimidyl ester linkers, which typically have higher water solubility than succinimidyl ester linkers, can be used. Sulfosuccinimidyl ester linkers can generally be prepared *in situ* from simple carboxylic acid containing linker by dissolving the linker in an amine-free buffer that contains *N*-hydroxysulfosuccinimide and 1-ethyl-3-(3-dimethylaminopropyl)carbodiimide. Also, 4-sulfo-2,3,5,6-tetrafluorophenol (STP) ester linkers can be prepared from 4-sulfo-2,3,5,6-tetrafluorophenol in the same way as sulfosuccinimidyl ester linkers.

As noted above, carboxylic acid containing linkers can be converted into more highly reactive linkers. For example, a carboxylic acid containing linker can be converted into an activated ester or mixed anhydride, which can be used to modify less reactive aromatic amines and alcohol containing active substances.

Sulfonyl chloride containing linkers are highly reactive, but these reagents can be unstable in water, especially at the higher pH required for reaction with some aliphatic amines. Accordingly, attaching linkers with sulfonyl chloride groups to nucleophilic functional group on an active substance is best done at low temperatures. If the nucleophilic functional group of an active substance is an amine, the sulfonamide bond that is formed is extremely stable. Further, sulfonyl chloride containing linkers can also react with phenols (including tyrosine), aliphatic alcohols (including polysaccharides), thiols (such as cysteine) and imidazoles (such as histidine).

Aldehyde containing linkers can react with nucleophilic substituents that contain amines to form Schiff bases.

Organo-halide containing linkers contain a carbon atom bonded to a halide (*e.g.,* fluorine, chlorine, bromine, or idodine). These moieties can react with active substances that contain amine, carboxylate, alcohol, or thiol functional group to form, for example, amine, ester, ether, or sulfide bonds.

### Nucleophilic Linkers and Electrophilic Active Substances

In another example, the first and/or second active substance can be coupled to a linker that can react with an electrophilic functional group on the active substance and form a chemical bond. Examples of such electrophilic functional groups that can react with and form a bond to the linker include, but are not limited to, proteins, peptides, or receptors that possess an electrophilic or potentially electrophilic atom (e.g., a carbonyl carbon atom, such as those found in esters and activated esters (*e.g*., succinimidyl esters, sulfosuccinimidyl esters), aldehydes, acyl derivatives (e.g., acyl azides, acyl nitriles), anhydrides and mixed anhydrides, or carboxylates, the carbon atom in an imine, isocyanates, or isothiocyanates, or halogenated carbon atoms). Other examples of electrophilic substituents include, but are not limited to, carbohydrates, polysaccharides, lipids, saturated and unsaturated fatty acids, or cholesterols that possess an electrophilic or potentially electrophilic carbon atom such as those noted above.

Also, when an electrophilic functional group is not generally reactive they can be converted into more reactive electrophilic species. For example, active substances that contain carboxylate or carboxylic acid groups may, depending on the conditions, not be very reactive toward a linker comprising a nucleophilic group. However, these electrophilic substituents can be converted into more reactive, activated esters by a carbodiimide coupling with a suitable alcohol, e.g., 4-sulfo-2,3,5,6-tetrafluorophenol or *N*-hydroxysulfosuccinimide. This results in a more reactive, electrophilic activated ester functional group on the active substance.

When the linker is to be attached to an active substance with an electrophilic functional group, such as those discussed above, the linker is typically nucleophilic or potentially nucleophilic. Examples of suitable nucleophilic linkers include, but are not limited to, hydrazines, amines, alcohols, carboxylates, and thiols. These compounds are generally well known in the art of organic chemistry.

When the nucleophilic linker contains an amine functional group, it can be particularly reactive toward an active substance comprising an electrophilic functional group. Such amine containing linkers can react with the active substance and form, for example, depending on the electrophilic functional group on the active substance, amide, carboxamide, sulfonamide, urea, or thiourea bonds. When the nucleophilic linker contains a carboxylate, they can react with the active substance's electrophilic functional group and form, for example, esters, thioesters, carbonates, or mixed anhydrides. When the nucleophilic linker contains an alcohol or thiol, they can react with the active substance's electrophilic functional group and form, for example, depending on the substituent, esters, thioesters, ethers, sulfides, disulfides, carbonates, or urethanes.

As with the nucleophilic active substance and electrophilic linker interaction discussed above, the kinetics of the electrophilic functional group on an active substance and nucleophilic linker reactions depends on the reactivity and concentration of both the linker and the active substance. Suitable linkers with nucleophilic functional groups capable of reacting directly or indirectly with an electrophilic group on the active substance include, but are not limited to, diamines, diols, dithiols, H₂N-(CH₂)ₙ-NH₂, (where n is some integer, *e.g.,* 2, 3, 4, 5, 6, 7, 8, 9, 10, 11, or 12); 2-pyridin dissulfide, amino alcohols, amino thiols, compounds containing an alcohol and thiol, and the like.

### Carbodiimide-Mediated Coupling

In yet another example, a carbodiimide-mediated coupling can be used to form a bond between the linker and the first and/or second active substance. For example, a linker with a hydrazine or amine group can be coupled to an active substance with carboxylate or carboxylic acid functional groups using water-soluble carbodiimides such as 1-ethyl-3-(3-dimethylaminopropyl)carbodiimide. Suitable linkers capable of carbodiimide-mediate coupling to carboxylate or carboxylic acid containing active substances are commercially available. Specific examples of such linkers include, but are not limited to, water soluble carbodiimides such as 1-ethyl-3-(3-dimethylaminopropyl)-carbodiimide hydrochloride and 1-cyclohexyl-3-(2-morpholinoethyl)-carbodiimide-metho-p-toluene sulfonate, alcohol and water soluble N-ethyoxycarbonyl-2-ethoxy-1,2-dihydroquinoline, and organic soluble *N,N'-*dicyclohexylcarbodiimide.

In an alternative aspect involving a carbodiimide-mediated coupling, a linker with a carboxylate or carboxylic acid group can be coupled to a first and/or second active substance with amine functional groups using water-soluble carbodiimides such as 1-ethyl-3-(3-dimethylaminopropyl)-carbodiimide. Suitable linkers capable of carbodiimide-mediate coupling to amine containing first and/or active substance are commercially available.

### Exemplary Combinations

In one example of the disclosed composites, the first active substance prior to bonding with the linker can have a nucleophilic functional group, the linker prior to bonding with the first and second active substance can have at least two electrophilic functional groups, and the second substance prior to bonding with the linker can have a nucleophilic functional group. In another example of the disclosed composites, the first active substance prior to bonding with the linker can have a nucleophilic functional group, the linker prior to bonding with the first and second active substance can have an electrophilic and nucleophilic functional group, and the second substance prior to bonding with the linker can have an electrophilic functional group. In yet another example of the disclosed composites, the first active substance prior to bonding with the linker can have an electrophilic functional group, the linker prior to bonding with the first and second active substance can have at a nucleophilic and electrophilic functional group, and the second substance prior to bonding with the linker can have a nucleophilic functional group. In still another example of the disclosed composites, the first active substance prior to bonding with the linker can have an electrophilic functional group, the linker prior to bonding with the first and second active substance can have at least two nucleophilic functional groups, and the second substance prior to bonding with the linker can have an electrophilic functional group.

In one example of the disclosed composites, the first active substance prior to bonding with the linker can be a polymeric amine, the linker prior to bonding with the first and second active substance can be a dialdehyde or diester, and the second substance prior to bonding with the linker can also be a polymeric amine. In another example of the disclosed composites, the first active substance prior to bonding with the linker can be a polyamide, protein, or polyalkyleneimine, the linker prior to bonding with the first and second active substance can be a dialdehyde or diester, and the second substance prior to bonding with the linker can be a protein, nucleic acid, antibacterial, antiviral, or neutralizing agent. In still another example of the disclosed composites, the first active substance prior to bonding with the linker can be a polymeric amine, polyalkyleneimine, polyalcohol, or protein, the linker prior to bonding with the first and second active substance can be a amino aldehyde, amino ester, hydroxy aldehyde, or hydroxy ester, and the second substance prior to bonding with the linker can be a protein, antibacterial, antiviral, or neutralizing agent. In another example of the disclosed composites, the first active substance prior to bonding with the linker can be a polyester or protein the linker prior to bonding with the first and second active substance can be a diamine, diol, dithiol, amino alcohol, or amino thiol, and the second substance prior to bonding with the linker can be a polyester, protein, nucleic acid, antibacterial, antiviral, or neutralizing agent.

### Methods

Disclosed herein are methods for the entrapment of materials in a cellulose matrix that involve the dissolution and regeneration of ionic liquid (IL) / cellulose compositions. The regenerated cellulose, which can contain a first active substance distributed substantially homogeneously therein, can be directly functionalized with one or more other second active substances or can be derivatized with a linker and then functionalized with the other second active substance(s). An advantage of the disclosed methods is that the linking of the first and/or second active substances can be performed in an ionic liquid, which can solubilize cellulose and active substances (e.g., proteins). Other solvent systems can render the active substances inactive. These methods can provide for the incorporation of activity (e.g., biological or chemical) into cellulose products like paper and clothing. Further, it will be clear to those skilled in the art that the disclosed methods and composites are applicable to the preparation of various forms of composites, e.g., films, beads, particles, flakes, fibers, substrates, coatings, capsules, gels, and the like, in or on which substances are entrapped.

In one aspect, disclosed herein is a method for preparing a cellulose/active substance comprising providing a composition comprising a regenerated cellulose matrix and a first active substance, wherein the first active substance is substantially homogeneously distributed within the regenerated cellulose matrix; contacting the first active substance with a linker, wherein the linker bonds to the first active substance; and contacting a second active substance with the linker, wherein the linker bonds to the second active substance, thereby providing a cellulose-active substance composite.

In some examples, the linker can be contacted to the first active substance prior to contacting the second active substance with the linker. Alternatively, the linker can be contacted to the second active substance prior to contacting the first active substance with the linker. Still further, the linker can be contacted to the first active substance prior to providing the composition comprising the regenerated cellulose matrix and first active substance. Also, in one example, the linker can be contacted to the first and second active substances at the same time.

The disclosed methods allow the entrapment of a wide range of materials (*i.e.,* "active substances"), providing a composite where the active substance(s) is(are) substantially homogeneously distributed throughout a regenerated cellulose matrix. One method of incorporating or entrapping a substance into a regenerated cellulose matrix is disclosed in U.S. Pat. No. 6,808,557, which is incorporated by reference herein in its entirety and for its teachings of cellulose regeneration and entrapment of substances in regenerated cellulose.

In the disclosed methods, one or more first active substances can be entrapped in a regenerated cellulose matrix. For example, one or more first active substances can be encapsulated or entrapped by dispersion or dissolution in a hydrophilic ionic liquid containing. solubilized cellulose. The ionic liquid can be substantially free of water, organic solvent, and nitrogen-containing base. Subsequent reformation of the cellulose as a solid matrix can result in the first active substance being dispersed in the regenerated cellulose matrix. The resulting material can contain the first active substance dispersed substantially homogeneously throughout the regenerated cellulose matrix.

A linker that can react with the first active substance as disclosed above can then be added to the material, followed by the addition of a second active substance that can be attached to (e.g., form a bond with) the linker. Alternatively, a second active substance that can form a bond with the first active substance entrapped in the regenerated cellulose matrix can be added directly to the matrix without the need for a linker. In still another aspect, a linker can be bonded to the second active substance and the resulting linker-second active substance conjugate can be added to the first active substance distributed in the regenerated cellulose matrix.

In further examples, the disclosed methods involve the preparation of cellulose/active substance composites incorporating molecular, nanoscale, and macroscopic materials within a cellulose matrix. For example, disclosed are methods of encapsulating such first active substances by regenerating a cellulose matrix from a hydrophilic ionic liquid solution containing a solid first active substance in a regenerating solution in which both the cellulose and the active substance are insoluble or difficult to dissolve (*i.e.,* substantially insoluble).

In another example, the disclosed methods involve the preparation of a composite comprising cellulose and a first active substance dissolved or dispersed in a hydrophilic ionic liquid and in which the ionic liquid solution is substantially free of water, a non-ionic organic solvent, and nitrogen-containing base. That composition can be contacted with a liquid non-solvent diluent in which both the cellulose and first active substance are substantially insoluble to form a liquid phase and a regenerated solid cellulose phase as a matrix encapsulating the first active substance and thereby forming a material that comprises a cellulose-encapsulated first active substance. Residual hydrophilic ionic liquid can thereafter be removed.

### IL/Cellulose Compositions

The ionic liquids that can be used in the disclosed methods and compositions contain ionized species (*i.e*., cations and anions) and have melting points usually below about 150 °C. In some cases the ionic liquids are organic salts containing one or more cations that are typically ammonium, imidazolium, or pyridinium ions, although many other types are known and disclosed herein.

Ionic liquids can be used in the dissolution of cellulose *(see* U.S. Pat. No. 6,824,599 and Swatloski et al., JAm Chem Soc 2002, 124:4974-4975). In U.S. Pat. No. 1,943,176, Graenacher first disclosed a process for the preparation of cellulose solutions by heating cellulose in a liquid *N*-alkylpyridinium or *N*-arylpyridinium chloride salt, especially in the presence of a nitrogen-containing base such as pyridine. However, that finding seems to have been treated as a novelty of little practical value because the molten salt system was, at the time, somewhat esoteric. This original work was undertaken at a time when ionic liquids were essentially unknown and the application and value of ionic liquids as a class of solvents had not been realized. Now, ionic liquids are a well-established class of liquids and are being used as replacements for conventional organic solvents in chemical, biochemical, and separation processes.

Linko and co-worker reported dissolving relatively low molecular weight cellulose (DP=880) in a mixture of *N*-ethylpyridinium chloride (NEPC) and dimethylformamide, followed by cooling to 30 °C, incorporation of various microbial cells into the solution, and then regeneration of the cellulose into a solid form by admixture with water (Linko et al., Enzyme Microb Technol 1979, 1:26-30). That research group also reported entrapment of yeast cells in a solution of 1 percent cellulose dissolved in a mixture of NEPC and dimethyl sulfoxide, as well as entrapment using 7.5 to 15 percent cellulose di- or triacetates dissolved in several organic solvents. (Weckstrom et al., in Food Engineering in Food Processing, Vol. 2, Applied Science Publishers Ltd., 1979, pp. 148-151.)

The hydrophilic ionic liquid solution used herein can be substantially free of water, a water- or alcohol-miscible organic solvent, or nitrogen-containing base and contains solubilized cellulose. Contemplated organic solvents of which the solution is free include solvents such as dimethyl sulfoxide, dimethyl formamide, acetamide, hexamethyl phosphoramide, water-soluble alcohols, ketones or aldehydes such as ethanol, methanol, 1- or 2-propanol, tert-butanol, acetone, methyl ethyl ketone, acetaldehyde, propionaldehyde, ethylene glycol, propylene glycol, the C₁-C₄ alkyl and alkoxy ethylene glycols and propylene glycols such as 2-methoxyethanol, 2-ethoxyethanol, 2-butoxyethanol, diethyleneglycol, and the like.

A cation of a hydrophilic ionic liquid can be cyclic and correspond in structure to a formula shown below: 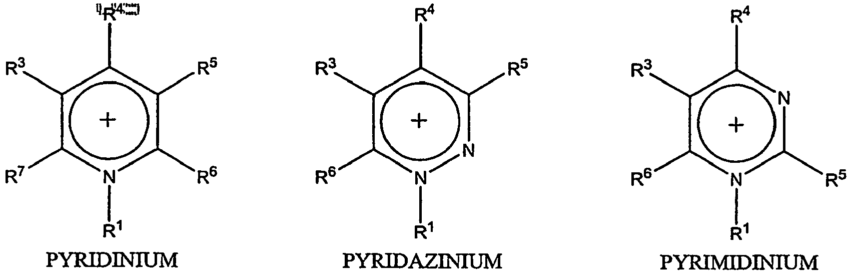 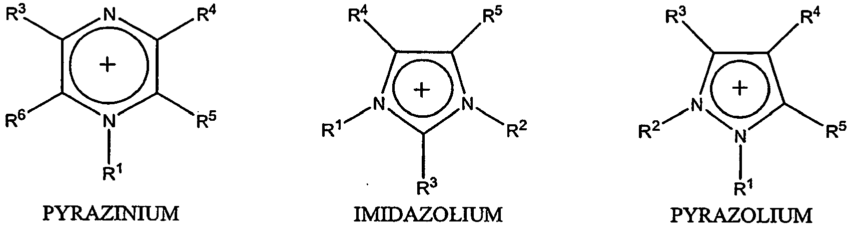 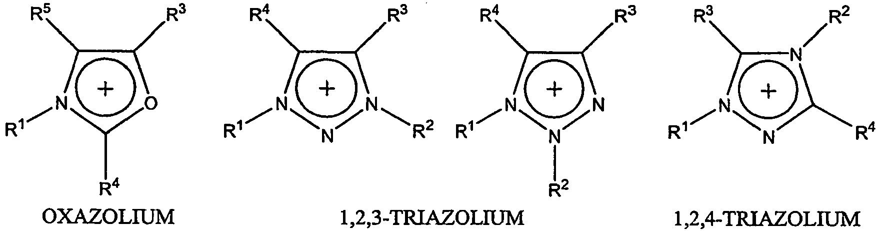 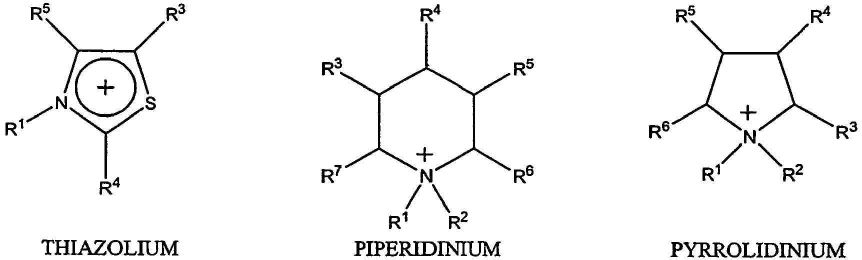 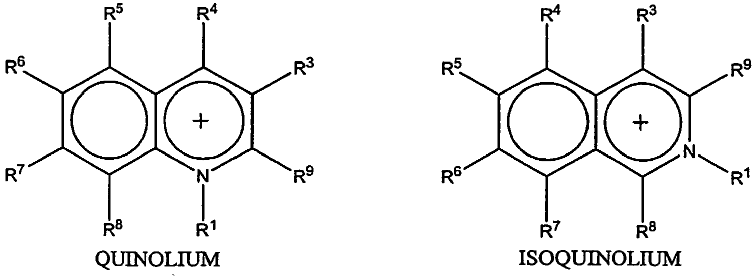 wherein R¹ and R² are independently a C₁-C₆ alkyl group or a C₁-C₆ alkoxyalkyl group, and R³, R⁴, R⁵, R⁶, R⁷, R⁸, and R⁹ (R³-R⁹), when present, are independently H, a C₁-C₆ alkyl, a C₁-C₆ alkoxyalkyl group, or a C₁-C₆ alkoxy group. In other examples, both R¹ and R² groups are C₁-C₄ alkyl, with one being methyl, and R³-R⁹, when present, are H. Exemplary C₁-C₆ alkyl groups and C₁-C₄ alkyl groups include methyl, ethyl, propyl, *iso*-propyl, butyl, *sec*-butyl, *iso*-butyl, pentyl, *iso*-pentyl, hexyl, 2-ethylbutyl, 2-methylpentyl, and the like. Corresponding C₁-C₆ alkoxy groups contain the above C₁-C₆ alkyl group bonded to an oxygen atom that is also bonded to the cation ring. An alkoxyalkyl group contains an ether group bonded to an alkyl group, and here contains a total of up to six carbon atoms. It is to be noted that there are two iosmeric 1,2,3-triazoles. In some examples, all R groups not required for cation formation can be H.

The phrase "when present" is often used herein in regard to substituent R group because not all cations have all of the numbered R groups. All of the contemplated cations contain at least four R groups, which can be H, although R² need not be present in all cations.

The phrases "substantial absence" and "substantially free" are used synonymously to mean that less than about 5 weight percent water is present, for example. In some examples, less than about one percent water is present in the composition. The same meaning is intended regarding the presence of a nitrogen-containing base.

An anion for a contemplated ionic liquid cation is a halogen (fluoride, chloride, bromide, or iodide), perchlorate, a pseudohalogen such as thiocyanate and cyanate or C₁-C₆ carboxylate. Pseudohalides are monovalent and have properties similar to those of halides (Schriver et al., Inorganic Chemistry, W. H. Freeman & Co., New York, 1990, 406-407). Pseudohalides include the cyanide (CN), thiocyanate (SCN⁻), cyanate (OCN⁻), fulminate (CNO⁻), and azide (N₃⁻) anions. Carboxylate anions that contain 1-6 carbon atoms (C₁-C₆ carboxylate) and are illustrated by formate, acetate, propionate, butyrate, hexanoate, maleate, fumarate, oxalate, lactate, pyruvate, and the like. Still other examples of anions that can be present in the disclosed compositions include, but are not limited to, sulfate, sulfites, phosphates, phosphites, nitrate, nitrites, hypochlorite, chlorite, perchlorate, bicarbonates, and the like, including mixtures thereof.

A contemplated ionic liquid used herein is hydrophilic and therefore differs from the hydrophobic ionic liquids described in U.S. Pat. No. 5,827,602 or those of U.S. Pat. No. 5,683,832 that contain one or more fluorine atoms covalently bonded to a carbon atom as in a trifluoromethanesulfonate or trifluoroacetate anion.

Some additional examples of ionic liquids include, but are not limited to, the following quaternary ammonium salts: Bu₄NOH, Bu₄N(H₂PO₄), Me₄NOH, Me₄NCl, Et₄NPF₆, and Et₄NCl.

The contemplated solvent can also comprise mixtures of two, or more, of the contemplated ionic liquids.

In one example, all R groups that are not required for cation formation; *i.e.,* those other than R¹ and R² for compounds other than the imidazolium, pyrazolium, and triazolium cations shown above, are H. Thus, the cations shown above can have a structure that corresponds to a structure shown below, wherein R¹ and R² are as described before.

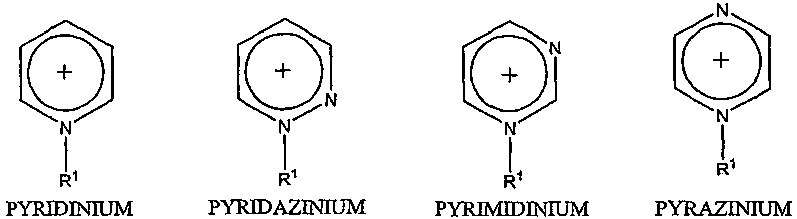

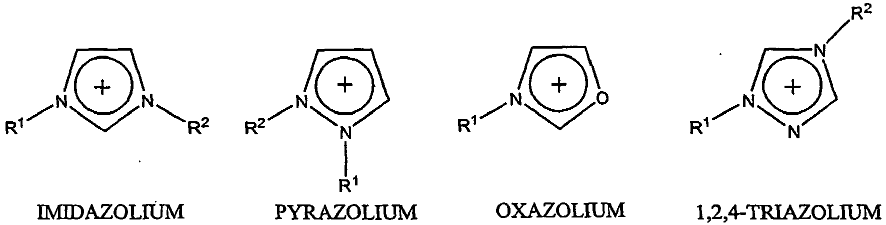

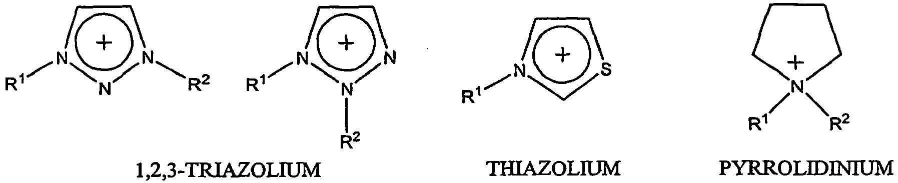

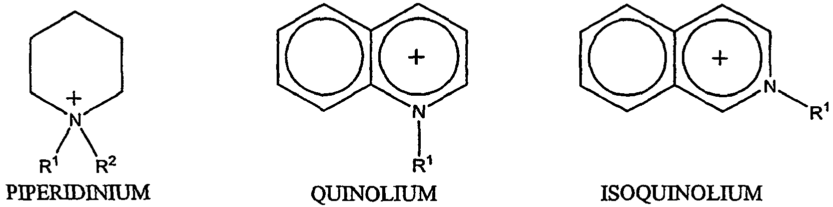

A cation that contains a single five-membered ring that is free of fusion to other ring structures is suitable for use herein. A cellulose dissolution method is also contemplated using an ionic liquid comprised of those cations. That method comprises admixing cellulose with a hydrophilic ionic liquid comprised of those five-membered ring cations and anions in the substantial absence of water to form an admixture. The admixture is agitated until dissolution is attained. Exemplary cations are illustrated below wherein R¹, R², and R³-R⁵, when present, are as defined before.

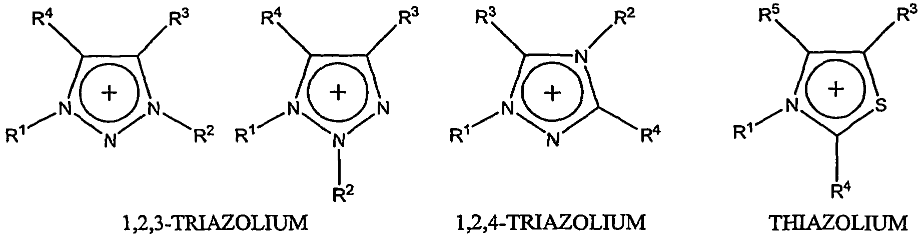

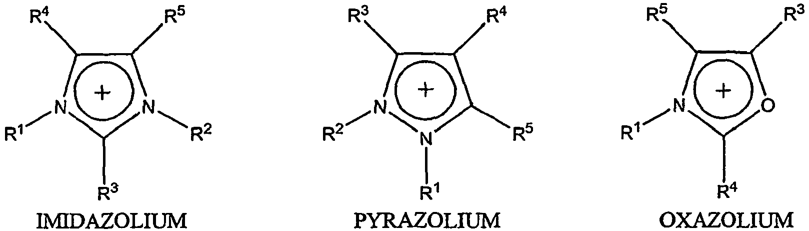

Of the cations that contain a single five-membered ring free of fusion to other ring structures, an imidazolium cation that corresponds in structure to Formula A is also suitable, wherein R¹, R², and R³-R⁵, are as defined before.

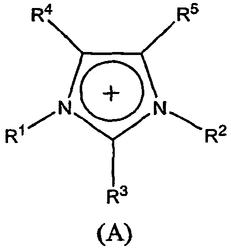

In a further example, an *N,N*-1,3-di-(C₁-C₆ alkyl)-substituted-imidazolium ion can be used; i.e., an imidazolium cation wherein R³-R⁵ of Formula A are each H, and R¹ and R² are independently each a C₁-C₆ alkyl group or a C₁-C₆ alkoxyalkyl group. In still other examples, a 1-(C₁-C₆-alkyl)-3-(methyl)-imidazolium [Cₙ-mim, where n=1-6] cation and a halogen anion can be used. In yet another example, the cation illustrated by a compound that corresponds in structure to Formula B, below, wherein R³ -R⁵ of Formula A are each hydrido and R¹ is a C₁-C₆ - alkyl group or a C₁-C₆ alkoxyalkyl group.

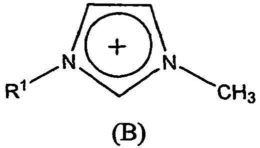

The disclosed ionic liquids can be liquid at or below a temperature of about 150 °C, for example, at or below a temperature of about 100 °C and at or above a temperature of about minus 100 °C. For example, *N*-alkylisoquinolinium and *N*-alkylquinolinium halide salts have melting points of less than about 150 °C. The melting point of *N*-methylisoquinolinium chloride is 183 °C, and *N*-ethylquinolinium iodide has a melting point of 158 °C. In other examples, a contemplated ionic liquid is liquid (molten) at or below a temperature of about 120 °C and above a temperature of about minus 44 °C. In some examples, a suitable ionic liquid can be liquid (molten) at a temperature of about minus 10 °C to about 100 °C.

Cellulose can be dissolved without derivitization in high concentration in ionic liquids by heating to about 100 °C (e.g., by heating to about 80 °C) in an ultrasonic bath, and most effectively by using microwave heating of the samples using a domestic microwave oven. Using a microwave heater, the admixture of hydrophilic ionic liquid and cellulose can be heated to a temperature of about 100 °C to about 150 °C.

An ionic liquid as disclosed herein can have an extremely low vapor pressure and typically decomposes prior to boiling. Exemplary liquification temperatures (*i.e*., melting points (MP) and glass transition temperatures (T_{g})) and decomposition temperatures for illustrative *N,N*-1,3-di-C₁-C₆ -alkyl imidazolium ion-containing ionic liquids wherein one of R¹ and R² is methyl are shown in Table 1 below.

**Table 1:**

| Ionic Liquid | Liquification Temperature (°C) | Decomposition Temperature (°C) | Citation* |
|---|---|---|---|
| [C₂mim] Cl | | 285 | a |
| [C₃mim] Cl | | 282 | a |
| [C₄mim] Cl | 41 | 254 | b |
| [C₆mim] Cl | -69 | 253 | |
| [C₈mim] Cl | -73 | 243 | |
| [C₂mim] I | | 303 | a |
| [C₄mim] I | -72 | 265 | b |
| [C₄mim] [PF₆] | 10 | 349 | b |
| [C₂mim] [PF₆] | 58-60 | 375 | c, a |
| [C₃mim] [PF₆] | 40 | 335 | a |
| [iC₃mim] [PF₆] | 102 | | a |
| [C₆mim] [PF₆] | -61 | 417 | d |
| [C₄mim] [BF₄] | -81 | 403, 360 | d, e |
| [C₂mim] [BF₄] | | 412 | a |
| [C₂mim] [C₂H₃O₂] | 45 | | c |
| [C₂mim] [C₂F₃O₂] | 14 | About 150 | f |

| | | | |
|---|---|---|---|
| a) Ngo et al., Thermochim Acta 2000, 357:97. b) Fanniri et al., J Phys Chem 1984, 88:2614. c) Wilkes et al., Chem Commun 1992, 965. d) Suarez et al., J Chim Phys 1998, 95:1626. e) Holbrey et al., J Chem Soc, Dalton Trans 1999, 2133. f) Bonhote et al., Inorg Chem 1996, 35:1168. | | | |

Illustrative 1-alkyl-3-methyl-imidazolium ionic liquids, [Cₙ-mim]X, where n = 4 and 6, X = Cl⁻, Br⁻, SCN⁻, (PF₆)⁻, (BF₄)⁻ have been prepared. The dissolution of cellulose (fibrous cellulose, from Aldrich Chemical Co.; Milwaukee, WI) in those illustrative ionic liquids under ambient conditions and with heating to about 100 °C, with sonication and with microwave heating has been examined. Dissolution is enhanced by the use of microwave heating. Cellulose solutions can be prepared very quickly, which is energy efficient and provides associated economic benefits.

A contemplated solution of cellulose in an ionic liquid can contain cellulose in an amount of from about 5 to about 35 wt. %, from about 5 to about 25 wt. %, from about 5 to about 20 wt. %, from about 5 to about 15 wt. %, from about 10 to about 35 wt. %, from about 10 to about 25 wt. %, from about 15 to about 35 wt. %, or from about 15 to about 25 wt. % of the solution. In other examples, the ionic liquid can contain cellulose in an amount of about 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, or 35 wt. % of the solution, where any of the stated values can form an upper or lower endpoint when appropriate. Further, a contemplated solution of cellulose in an ionic liquid can contain cellulose in an amount of from about 5 to about 35 parts by weight, from about 5 to about 25 parts by weight, from about 5 to about 20 parts by weight, from about 5 to about 15 parts by weight, from about 10 to about 35 parts by weight, from about 10 to about 25 parts by weight, from about 15 to about 35 parts by weight, or from about 15 to about 25 parts by weight of the solution. In other examples, the ionic liquid can contain cellulose in an amount of about 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, or 35 parts by weight of the solution, where any of the stated values can form an upper or lower endpoint when appropriate. Also, cellulose displays high solubility in the disclosed ionic liquids. Viscous, birefringent liquid crystalline solutions are obtained at high concentration, e.g., from about 10 to about 25 wt. % or from about 10 to about 25 parts by weight.

A solution comprised of cellulose in a molten hydrophilic ionic liquid solvent that is substantially free of water or a nitrogen-containing base is contemplated for preparing a regenerated cellulose matrix with encapsulated active substance. As such, such a liquid or solution contains about one percent or less water or a nitrogen-containing base. Thus, when a solution is prepared, it is prepared by admixing the ionic liquid and cellulose in the absence of water or a nitrogen-containing base to form an admixture.

As noted above, the ionic liquid is comprised of cations and anions. In one example, the solution can be comprised of cellulose dissolved in a hydrophilic liquid whose cations contain a single five-membered ring free of fusion to other ring structures, as discussed previously. The solution can be used as is to carry out further reactions on the cellulose such as acylation to form cellulose acetate or butyrate, or for regeneration.

Further, the use of ionic liquids, such as 1-butyl-3-methylimidazolium chloride ([C₄mim] Cl), as solvents for non-derivatizing cellulose dissolution and regeneration has been described (PCT Publication No. WO03/029329 A2; Swatloski et al., J Am Chem Soc 2002, 124:4974-4975; Swatloski et al., "Ionic Liquids for the Dissolution and Regeneration of Cellulose," In Molten Salts XIII: Proceedings of the International Symposium, Trulove, et al., Eds., The Electrochemical Society: Pennington, NJ, 2002, Vol.2002-19, pp. 155-164, which are incorporated by reference herein for at least their teachings of IL/cellulose dissolution and regeneration methods).

Also, Wu et al. (Biomacromolecules 2004, 5:266-268) disclosed how 1-alkyl-3-allylimidazolium chloride ILs could be used as solvents for homogeneous derivitization of cellulose and Heinze *et al.* (Liebert and Heinze, Biomacromolecules 2005, 6:333-340) described using a alkylammonium fluoride/dimethylsulfoxide solvent system for similar derivitizations of cellulose. In contrast, the methods disclosed herein use the dissolution characteristics of ILs for cellulose to enable physical encapsulation of macromolecules such as *Rhus vernificera* laccase (E.C. # 1.10.3.2) in regenerated cellulose films, and the disclosed methods demonstrate the compatibility of biomolecules such as enzymes with IL-cellulose environments (Turner et al., Biomacromolecules 2004, 5:1379-1384; U.S. Pat. No. 6,808,557). Enzymatically active membranes were prepared; however, significant loss in activity of the entrapped laccase, compared to the enzyme in an aqueous environment, was observed.

### Regeneration

In the disclosed methods, cellulose is regenerated from an ionic liquid and in the presence of a first active substance. Examples of suitable first active substances are disclosed herein. And the disclosed methods are particularly useful for active substances that comprise water-insoluble metal extractants, water-insoluble dyes, and magnetite particles of about 5 micrometers in diameter (largest dimension if not approximately spherical), which can be dispersed in the IL solution, either physically to form a suspension or colloid, or by dissolving the components in the IL solvent, and then regenerating the composite material.

Upon regeneration, the distribution of the first active substance can be substantially homogeneous within the matrix of regenerated cellulose. In many instances, the regenerated solid cellulose can have about the same molecular weight as the original cellulose from which it is prepared and can typically contain a degree of polymerization number (DP) of about 1200 or more. Also, the regenerated cellulose can be substantially free of an increased amount of substituent groups relative to the starting cellulose and entrapped ionic liquid degradation products.

A minor amount of cellulose hydrolysis can take place during dissolution and regeneration. However, the weight average molecular weight of the cellulose after regeneration can be about 90 % that of the cellulose prior to dissolution and regeneration. For example, the molecular weight percent of the cellulose can be from about 90 % to about 100 %, from about 92 % to about 98 %, from about 94 % to about 96 %, from about 90 to about 95 %, from about 95 % to about 100 %. In other examples, the molecular weight percent of the cellulose can be about 90, 91, 92, 93, 94, 95, 96, 97, 98, 99, or 100 % that of the cellulose prior to dissolution or regeneration, where any of the stated values can form an upper or lower endpoint when appropriate. This result is contrary to that of U.S. Pat. No. 5,792,399 where the starting cellulose is treated with a cellulase in the presence of NMMNO in order to effect dissolution.

The substituent groups of which the regenerated cellulose is substantially free are those that were not present in the cellulose that was dissolved in the IL. Thus, for example, the hydroxyl groups of a natural cellulose can be oxidized to form oxo (substituents with C=O bonds) functionality such as ketones, aldehydes, or carboxylic acids, and natural cellulose can contain amounts of such functionalities. In one aspect, the dissolution/regeneration process used herein does not cause the formation of more than a few percent more of those groups than were originally present. Where oxidized cellulose that contains a high level of oxo functionality is used as the starting material such as where Regenerated Oxidized Cellulose U.S.P. (ROC), the regenerated cellulose again contains about the same amount of functionality (e.g., about 18 to about 24 percent carboxyl groups for ROC) after dissolution and regeneration as was present prior to those steps being carried out.

Another group of substituents of which the regenerated cellulose can be substantially free are those substituents such as xanthate groups, C₂-C₃ 2-hydroxyalkyl (e.g., 2-hydroxyethyl and 2-hydroxypropyl) groups, and carboxyl groups such as acetyl and butyryl that are used in other processes to dissolve cellulose.

The weight ratio of cellulose to first active substance in the molten composition can be quite varied. It can depend on such factors as the type of active substance, the desired amount of active substance to be entrapped, and the like. For example, a range of from about 1000:1 1 to about 1:2 by weight of cellulose to active substance is contemplated. More usual weight ratios contemplated are from about 100:1 to about 1:1, from about 75:1 to about 5:1, from about 50:1 to about 10:1, from about 75:1 to about 25:1, from about 100:1 to about 50:1, from about 50:1 to about 1:2, and from about 10:1 to about 1:2. In some examples, the ratio of cellulose to active substance can be about 1:2, 1:1, 2:1, 3:1, 4:1, 5:1, 6:1, 7:1, 8:1, 9:1, 10:1, 11:1, 12:1, 13:1, 14:1, 15:1, 16:1, 17:1, 18:1, 19:1, 20:1, 21:1, 22:1, 23:1, 24:1, 25:1, 26:1, 27:1, 28:1, 29:1, 30:1, 31:1, 32:1, 33:1, 34:1, 35:1, 36:1, 37:1, 38:1, 39:1, 40:1, 41:1, 42:1, 43:1, 44:1, 45:1, 46:1, 47:1, 48:1, 49:1, 50:1, 51:1, 52:1, 53:1, 54:1, 55:1, 56:1, 57:1, 58:1, 59:1, 60:1, 61:1, 62:1, 63:1, 64:1, 65:1, 66:1, 67:1, 68:1, 69:1, 70:1, 71:1, 72:1, 73:1, 74:1, 75:1, 76:1, 77:1, 78:1, 79:1, 80:1, 81:1, 82:1, 83:1, 84:1, 85:1, 86:1, 87:1, 88:1, 89:1, 90:1, 91:1, 92:1, 93:1, 94:1, 95:1, 96:1, 97:1, 98:1, 99:1, or 100:1, where any of these ranges can form an upper or lower endpoint when appropriate. Those weight ratios are reflected also in the regenerated cellulose product. Also, the ratio of regenerated cellulose to second active substance in the composite can be any of these stated values.

Ionic liquids containing chloride anions appear to be most effective at preparing regenerated cellulose matrixes with a first active substance distributed therein. The chloride anion is not required; however, as reasonable solubility was also observed when the ionic liquid contained thiocyanate, perchlorate, and bromide anions. No solubility was observed for ionic liquids containing tetrafluoroborate or hexafluorophosphate anions.

In usual practice, cellulose is dissolved in an IL to form a homogeneous or liquid crystalline anisotropic solution. The first active substance can then be introduced into the IL solution, either dissolved, or dispersed in the medium (for example nanoparticles or macroscopic beads). The cellulose matrix can then be formed by regeneration upon contacting the IL solution with a non-solvent diluent, resulting in formation of a regenerated cellulose material (as a floc, film, membrane, fiber, or monolith depending on processing) in which the additives are entrained.

The order of addition of the components to the IL solvent is not important for the regeneration and encapsulation process, and depends on external consideration such as the stability of the individual components under processing conditions. Cellulose can be initially dissolved to form a solution in the IL, followed by dispersion of the first active substance, and regeneration. Or, the first active substance can be dispersed in the IL, followed by dissolution of cellulose and subsequent regeneration of the cellulose.

The regenerating fluid or non-solvent diluent is a non-solvent for the active substance and the cellulose. That is, the regenerating fluid does not dissolve large quantities of either the cellulose or the first active substance, so that both ingredients are substantially insoluble in the regenerating fluid. Thus, the first active substance and the cellulose are independently soluble to an extent of less than about 5 wt. %, (e.g., less than about 1 %) in the regenerating fluid. The ionic liquid is miscible with the regeneration fluid, and contacting of the IL phase with the regeneration fluid induces regeneration of the solid cellulose polymer that is the matrix in which the active substance is encapsulated.

Where extrusion of an ionic liquid solution of cellulose and an additive through a die is contemplated, that extrusion can be accomplished in a number of manners that are well known. For example, in some aspects, a surface of the die containing one or more orifices through which the solution is extruded is below the surface of the regenerating fluid. In other aspects, the solution passes from a die orifice through air or another gas such as nitrogen or argon prior to being contacted with the regenerating fluid.

The liquid non-solvent can be miscible with water. Exemplary liquid non-solvents include water, an alcohol such as methanol, or ethanol, acetonitrile, an ether such as furan or dioxane, and a ketone such as acetone. The advantage of water is that the process avoids the use of a volatile organic compound (VOC). Regeneration does not require the use of volatile organic solvents. The ionic liquid can be dried or otherwise freed of the liquid non-solvent and reused after regeneration.

The concepts described herein permit addition of IL-soluble chemicals to be added, followed by regeneration using a non-solvent diluent in which both cellulose and first active substance are non- or sparingly soluble. Incorporation of nanoparticles, and macroscopic particles in the cellulose matrix that are initially dispersed within the viscous IL medium, results in a substantially homogeneous dispersion within the regenerated cellulose matrix, forming a nano-dispersed composite. The nano-particle first active substance can then be linked to a second active substance via a suitable linker.

These discloses methods have advantages for formation of composites containing many solid active substance, which are desirable to encapsulate in a regenerated cellulose matrix, particularly for the incorporation of active substances that are not soluble in water or other common solvents, for example nanoparticles or macroscopic materials.

Matrices formed by this process are capable of effecting a slow rate of release of the encapsulated materials by diffusion through the shell to the surrounding medium, swelling in a liquid medium such as water, by slow, controlled degradation of the cellulose matrix structure, or by slow dissolution of the active substances from within the matrix.

The final morphological form of the disclosed composites depends on the regeneration process and on the desired applications of the materials. For example, high surface area beads, cylinders or flocs can be manufactured for filtration or separation applications, whereas thin films can be prepared for membrane and sensor uses.

### Linking

As noted, the first active substance, which is embedded in the regenerated cellulose matrix, can be coupled to a linker and a second active substance. Methods for coupling the first and second active substances to a linker are disclosed herein. Other methods for coupling the first and second active substance to a linker are reactions known in the art. The particular method will depend on the specific first active substance, second active substance, and linker. Generally, the regenerated cellulose matrix comprising the first active substance distributed therein can be treated with a linker that can form a bond with the first active substance. Alternatively, the linker and the second active substance can be coupled beforehand and then contacted with the first active substance entrapped in the regenerated cellulose matrix. In a further aspect, the first active substance can be coupled to the linker and then contacted with the cellulose IL solution. Then upon regeneration of the cellulose, the first active substance coupled to the linker can be distributed substantially homogeneously within the regenerated matrix.

### Uses

The described cellulose/active substance composites can have a wide variety of uses. For example, preparing regenerated cellulose/polyamine composite films and beads can result in high loading of primary amines on the surface of the regenerated cellulose matrix, allowing direct one step conjugation of a second active species. Using an IL based regeneration process, film and bead architectures can be prepared and used as immobilization supports for proteins, nucleic acids, biomolecules, and the like.

Useful applications of such cellulose/active substance composites include, but are not limited to membranes/filters, fuel cells, separations devices, electrolysis membranes, flame retardants, biocidal filters, sensors, metal extractants, supports for enzymes, extractant materials for filtration, separations and extractions of metal ions, biomolecules, and gas molecules, magnetic particles for membrane/extractant processing, materials modifiers for cellulose coatings, bioactive agents (controlled release, sensing, destruction), metal complexants (sensing, controlled release, extractants and binding and separations agents for filters), water insoluble dyes for coloring cellulose, sensing and indicators, photoresists, incorporation of nanoparticles as photonic agents or UV screens, magnetic particles for magneto-responsive beads, filtration and reactive beds, nanoparticle catalysis, dispersions of clays and other fire-retardant materials, enzyme supports, supported polymer electrolytes, cavity-forming pillars/scaffolding for the manufacture of nanoporous materials.

In some specific examples, the disclosed cellulose/active substance composites can be used to form articles such as textiles or paper products. In one example, a textile can be prepared from a cellulose/active substance composite where the active substance comprises an antibacterial, antiviral, and/or neutralizing agent. The resulting textile can be used as protective clothing, for example, surgical gowns, gloves, masks, bandages and the like. The textiles can also be used in uniforms (*e.g.,* first responder or military uniforms). Articles where the composite comprises an antibacterial, antiviral, coagulating agent can be used to prepare sutures or stitches.

The disclosed composites can also be used as sensing materials to detect various compounds including polyphenols, aromatic amines, and aminophenols and as solid support materials for enzyme catalyzed transformations. Further, the disclosed composites can be used in separation processes (e.g., chromatography), and/or constant flow reactors.

### EXAMPLES

The following examples are set forth below to illustrate the methods and results according to the disclosed subject matter. These examples are not intended to be inclusive of all aspects of the subject matter disclosed herein, but rather to illustrate representative methods and results. These examples are not intended to exclude equivalents and variations of the present invention which are apparent to one skilled in the art.

Efforts have been made to ensure accuracy with respect to numbers (e.g., amounts, temperature, etc.) but some errors and deviations should be accounted for. Unless indicated otherwise, parts are parts by weight, temperature is in °C or is at ambient temperature, and pressure is at or near atmospheric. There are numerous variations and combinations of reaction conditions, *e.g.,* component concentrations, temperatures, pressures and other reaction ranges and conditions that can be used to optimize the product purity and yield obtained from the described process. Only reasonable and routine experimentation will be required to optimize such process conditions.

All chemicals used were of analytical grade, purchased from Sigma-Aldrich (Milwaukee, WI), and used without further purification unless otherwise noted.

### Example 1: Preparation of functionalized IL-regenerated cellulose films

Underivitized microcrystalline cellulose (Aldrich Chemical Co.; Milwaukee, WI), was dissolved in the IL, 1-butyl-3-methylimidazolium chloride ([C₄mim]Cl) to form a 5 weight percent (wt.%) solution using microwave pulse heating as previously described (PCT Publication No. WO03/029329 A2; Swatloski et al., JAm Chem Soc 2002, 124:4974-4975; Swatloski et al., "Ionic Liquids for the Dissolution and Regeneration of Cellulose" In Molten Salts XIII: Proceedings of the International Symposium, Trulove et al., Eds., The Electrochemical Society: Pennington, NJ, 2002; Vol. 2002-19, pp. 155-164). After complete dissolution at around 120 to 150 °C, forming a viscous clear solution, the mixture was allowed to cool to approximately 60 °C, forming a super-cooled liquid. A second polymer *(see* Table 2) was then added to the cellulose solution at a concentration of approximately 20 wt.% relative to the cellulose component and the mixture was manually homogenized (to ensure complete mutual dispersion) and then cast as a film (1 mm thickness) on a glass plate using coating rods (R&D Specialties, Weber, NY). The films were reconstituted and the IL solvent was leached from the films with deionized (DI) H₂O. Following complete reconstitution, films were placed in a bath and immersed in DI H₂O for at least 24 hours (h) to leach residual [C₄mim]Cl from the film.

### Example 2: X-ray photoelectron spectroscopy (XPS)

The modification in chemical structure of the functionalized cellulose films was measured using a Kratos Analytical Analysis 165 Multitechnique Spectrometer working at a base pressure of less than 10⁻⁹ Torr. A photon source of A1 Kα radiation (1486.6 electron volts (eV)) was used and emitted photoelectrons were analyzed with a 165 mm mean radius concentric hemispherical analyzer equipped with 8 channeltron detectors operated in the fixed analyzer mode. Survey scans were taken using a pass energy of 160 eV whereas high resolution scans were collected at 80 eV. Samples were prepared as described above and dried in air under ambient conditions.

### Example 3: Preparation of functionalized IL-regenerated cellulose beads

An approximately 10 wt. % solution of microcrystalline cellulose (4.8 g) in [C₄mim]Cl (50.0 g) was prepared using microwave pulse heating (PCT Publication No. WO03/029329 A2; Swatloski et al., J Am Chem Soc 124:4974-4975, 2002; Swatloski et al., "Ionic Liquids for the Dissolution and Regeneration of Cellulose" In Molten Salts XIII: Proceedings of the International Symposium, Trulove et al., Eds., The Electrochemical Society: Pennington, NJ, 2002, Vol. 2002-19, pp. 155-164). The solution was then cooled slightly and 1.0 g BSA (Sigma; Milwaukee, WI) was added and homogenized using a glass stirring rod to prepare a mixture containing 1:5 weight ratio of BSA:cellulose. Beads were prepared by dispersing the solution in a rapidly stirring hot (100 °C) polypropylene glycol (PPG 425) bath using an overhead ultrahigh-torque stirrer (Caframo Limited; Wiarton, Ontario) at 850 rpm. The cellulose/[C₄mim]Cl/BSA mixture was slowly added to the hot PPG, dispersing to form small beads, and was stirred for 30 min. During stirring, the temperature of the PPG bath was allowed to fall to approximately 40 °C hardening the dispersed cellulose/[C₄mim]Cl/BSA beads and preventing subsequent agglomeration. The solution was removed from the stirrer and ethanol was slowly added to begin reconstitution of the cellulose composite beads. The beads were washed five times with ethanol followed by five washings with DI H₂O then filtered using a set of mesh filters. The major fraction with diameters between 0.25-1.00 mm were collected and stored under DI H₂O prior to functionalization.

### Example 4: Attachment of biomolecules to functionalized cellulose support

The reconstituted cellulose composite materials were removed from their DI H₂O bath and added to a solution of 18 mL 25 wt.% glutaraldehyde (Sigma; Milwaukee, WI) and 23 mL 0.1 M phosphate buffer (pH 7.0) and stirred for 12 h at room temperature. The resultant imine bonds were reduced using 50 mL of cyanoborohydride coupling buffer (Sigma), pH 7.5 for 2 h at room temperature. Finally, the materials were washed with copious amounts of DI H₂O and phosphate buffer to ready them for enzyme attachment. Activated support materials were placed in an aqueous solution containing either 7.5 mg *Rhus vernificera* laccase (E.C. # 1.10.3.2) or 100.0 mg lipase (E.C. # 3.1.1.3; L-9518) (both purchased from Sigma) for 2 h at room temperature for surface attachment. Materials were then washed with 0.1% Tween 20 followed by DI H₂O to remove electrostatically surface-bound enzyme. Materials were stored in a DI H₂O bath at 4 °C until use.

### Example 5: Laccase-catalyzed syringaldazine oxidation assay

To determine the activity of laccase bound to the surface of a functionalized film, the colorimetric oxidation of syringaldazine was monitored using UV/Vis spectroscopy. Samples of each film were cut into circular disks (d = 1.60 cm, A = 2.01 cm²) and immersed in a solution containing 2.8 mL 20 mM phosphate buffer (pH 7.13) and 0.054 mg reduced syringaldazine. The samples were incubated for 180 min at 27 °C followed by a DI H₂O washing. Each sample was individually, vertically mounted on a microscope slide for UV/Vis spectroscopic measurement. Samples were scanned from 300-700 nm on a Varian Cary 3C UV-visible spectrophotometer (Palo Alto, CA). The specific activity of laccase was calculated using the extinction coefficient for oxidized syringaldazine (ε = 65,000) (Harkin and Obst, Science 1973, 180:296-298), and a path length (film thickness) of 1 mm. All reactions were performed in triplicate.

### Example 6: Lipase-catalyzed transesterification of ethyl butyrate with butanol

0.06 M ethyl butyrate (0.016 mL), 0.12 M *n*-butanol (0.022 mL), and 0.06 M 1,3-dimethoxybenzene (0.016 mL), as internal standard, were added to 2 mL *tert*-butanol. 119 mg or 166 mg enzyme (Novozym 435 (dried) and B-immobilized lipase (wet), respectively) was added to the reaction solution and allowed to proceed at 40 °C and 150 rpm for 24 h. 50 *µ*L aliquots of reaction solution were diluted in 100 *µ*L of 65:35 MeOH:acetate buffer (pH 4.5) and injected into a Shimadzu HPLC (Columbia, MD) fitted with a C-18 Jordi Gel column, 150 mm x 4.6 mm, (Alltech, Deerfield, IL) using 65:35 MeOH:acetate buffer as eluent at a flow rate of 1.0 mL min⁻¹. Formation of the reaction product, butyl butyrate, was detected and monitored using a Shimadzu differential refractometric detector (RID-10A). All reactions were performed in triplicate (Lau et al., Green Chem 2004,6:483-487).

### Results and Discussion

These examples demonstrate that the dissolution and regeneration process for cellulose utilizing the IL, 1-butyl-3-methylimidazolium chloride ([C₄mim]Cl) (PCT Publication No. WO03/029329 A2; Swatloski et al., J Am Chem Soc 2002, 124:4974-4975; Swatloski et al., "Ionic Liquids for the Dissolution and Regeneration of Cellulose" In Molten Salts XIII: Proceedings of the International Symposium, Trulove et al., Eds., The Electrochemical Society: Pennington, NJ, 2002, Vol. 2002-19, pp. 155-164), can be used to facilitate a simple, one-step process to prepare cellulose-polyamine composites as thin films and as beads (Table 2). The surface accessible amine groups incorporated into the composites can be used as anchoring points to attach enzymes *via* conventional glutaraldehyde bioconjugation methods (Illanes et al., "Immobilization of lactase and invertase on crosslinked chitin." In Bioreactor immobilized enzymes and cells, Moo-Young, Ed., Elsevier Applied Science: London, 1998, pp. 233-249), providing a straightforward methodology to prepare surface immobilized enzymes for use in bioassays and supported reaction media.

**Table 2: Polymers incorporated into cellulose composite films.**

| Polymer | Molecular Weight | 1° Amine Concentration | Solubility in H₂O | Appearance of film |
|---|---|---|---|---|
| **A** - Poly-lysine hydrobromide | About 48,500 | About 4.4 mmol g⁻¹ | 50 mg mL⁻¹ | transparent |
| **B** - Bovine serum albumin | About 66,500* | About 0.5 mmol g⁻¹ | 40 mg mL⁻¹ | transparent |
| **C** - JEFFAMINE® D-230 | 230 | 8.3 mmol g⁻¹ | >10 % | transparent |
| **D** - JEFFAMINE® T-403 | 403 | 6.0 mmol g⁻¹ | >10 % | transparent |
| **E** - JEFFAMINE ® D-2000 | 2000 | 1.0 mmol g⁻¹ | 0.1-1 % | transparent |
| **F** - JEFFAMINE ® T-5000 | 5000 | 0.5 mmol g⁻¹ | <0.1 % | transparent |
| **G** - Polyethyleneimine (linear) | 18,250 | 5.2 mmol g⁻¹ | soluble | transparent |
| **H** - Polyethyleneimine (branched) | 25,000 | 0.1 mmol g⁻¹ | soluble | opaque |

| | | | | |
|---|---|---|---|---|
| * Hirayama, Biochem Biophys Commun 1990, 173:639. | | | | |

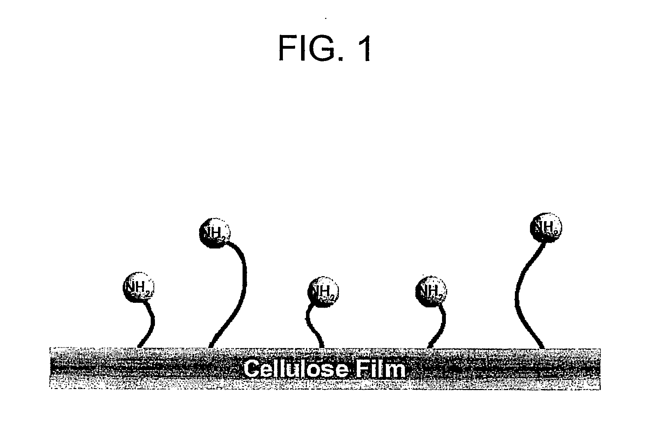

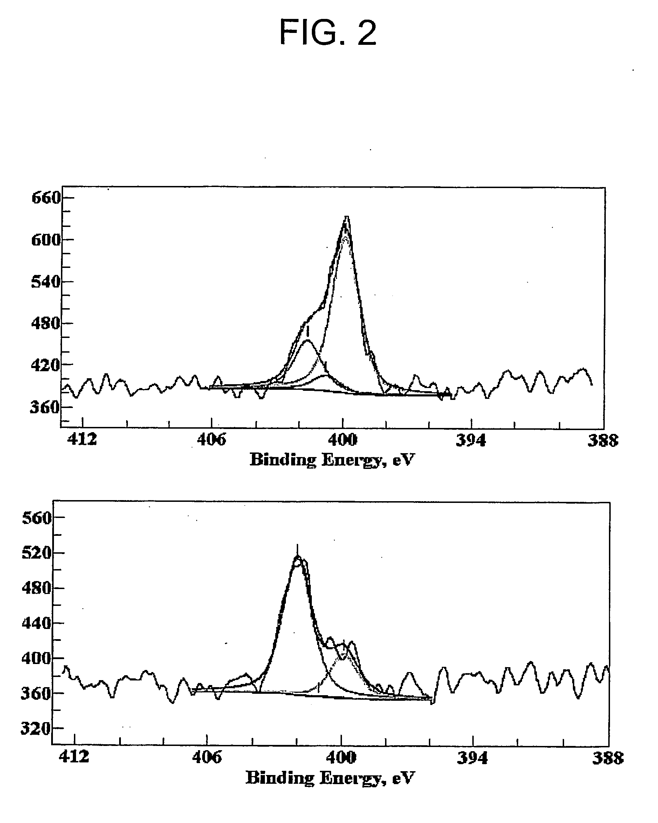

Initially, the high MW protein, bovine serum albumin (BSA) was used as the secondary polymer leading to the formation of transparent composite films. Observation of the characteristic absorbance signature in the UV/Vis spectrum at 280 nm indicated the presence of protein remained ensnared within the bulk cellulose matrix. This suggested the possibility that primary amine-containing lysine residues might be present and accessible on the surface of the membranes, represented schematically in Figure 1. This would allow simple glutaraldehyde activation and subsequent functionalization leading to the production of materials appropriate for use as solid supports in immobilized biocatalytic reactions. To this end, X-ray photoelectron spectroscopy (XPS) was used to analyze the surface of these composites to confirm, and quantify, the presence of available surface amine functionality (Bora et al., J Membr Sci 2005, 250:215-222). Pass scans were performed to determine the surface atomic composition of each sample and revealed the presence of nitrogen to be 0.0 atom% in the "native" cellulose (no reconstitution), 0.4 atom% in the IL-reconstituted cellulose, and 5.6 atom% in the IL-reconstituted cellulose composite containing BSA. Further, peakfit analysis of the N1s spectrum (Figure 2) was used to quantify the relative concentrations of various surface nitrogen-containing groups present on both the IL-reconstituted samples. Of the 0.4 atom% of nitrogen on the surface of the IL-reconstituted cellulose, the relative concentration of NOx accounted for 58.8% and the relative concentration of primary amine groups was the remaining 42.1%. The presence of NOₓ here can simply be attributed to residual imidazolium that formed a surface adsorbed layer. As well, the presence of NH₂ is likely attributed to decomposition material from the cationic portion of the ionic liquid that may have existed as an impurity of was formed upon heating. The relative surface nitrogen composition of the IL-reconstituted cellulose composite material (5.6 atom%) was attributed to 76.1 % NH₂ and 23.9% NOₓ. The marked increase in the concentration of surface primary amine groups on the cellulose composite compared to the "pure" IL-reconstituted cellulose demonstrates the feasibility of further conjugation of the material.

The use of the lysine residues in BSA as anchoring sites utilizes only approximately 6 % of the polymer's total weight, leaving a significant number of these potential reaction sites inaccessibly buried within the bulk of the matrix. In order to facilitate increased enzymatic attachment, and thus relative activity, a series of other polymers, containing higher concentrations of primary amines, were investigated as additives to incorporate into the cellulose films. Polymers examined (Table 2) include poly-lysine hydrobromide, several JEFFAMINE® polymers (Huntsman, Salt Lake City, UT) with a range of molecular weight and amine concentrations, and two variable polyethyleneimine (PEIs) polymers. The resultant amine functions of the composite films were then activated and functionalized as described above. Following biocatalyst attachment, the laccase-catalyzed oxidation of syringaldazine was performed to determine the activity of the bound enzyme (Table 2).

The suitability of these materials for use as supports for biological assays was first determined by preparing test strips from the composite films generated. Transmission mode UV/Vis spectroscopy was used to screen the materials prepared. This necessitated that the films were optically transparent thus, examples prepared which proved to be opaque, representing bulk immiscibility of the two polymer components and formation of polymer microdomains (e.g., the cellulose/branched polyethyleneimine blend H (Table 2)) were excluded at this stage.

Laccase was bound to the films using the glutaraldehyde linking methodology and its activity was determined using the standard oxidation of syringaldazine assay (Harkin and Obst, Science 1973, 180:296-298), and the results (Table 3) compared to both the native enzyme and to results from cellulose films containing encapsulated laccase previously reported. Overall, laccase activity was equivalent to or higher than that of the entrapped enzyme. The specific activities were calculated for laccase attached to each material resulting in values ranging from 0.030 to 0.189, accounting for an almost 50 % increase in activity for the laccase attached to C. An increase in activity is likely due to improved flexibility of the enzyme as well as the formation of stable bonds between the glutaraldehyde and protein (Abdulkareem et al., Prowess Biotechnol 2002, 37:1387-1394). Based on the results obtained from the syringealdazine assay, composite materials B and C appear to be best suited materials for this application whereas the poorest performing material, G, contained linear polyethyleneimine as the secondary polymer. These results show no correlation between primary amine concentration of the secondary polymer and resultant laccase activity that likely reflect poor solubility and/or homogeneity of some of the secondary polymers in the [C₄mim]Cl IL/cellulose mixture.

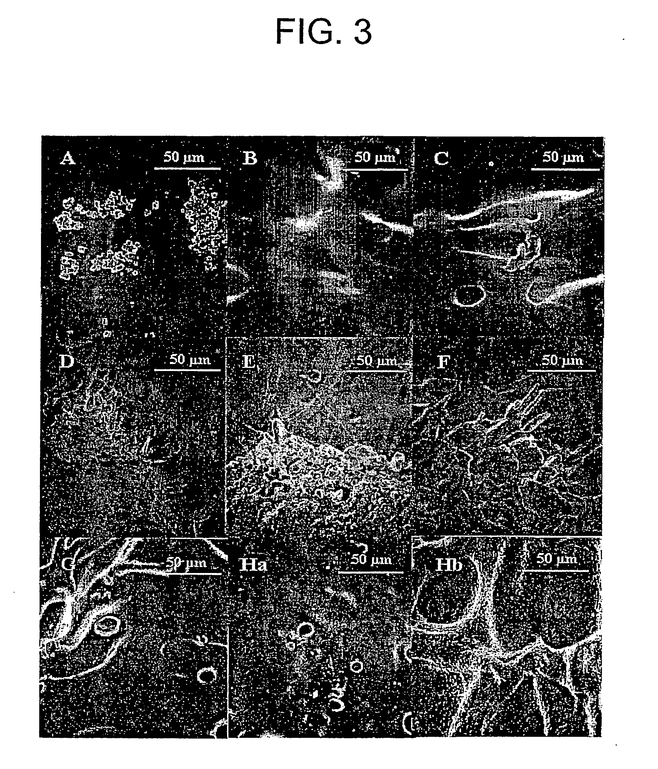

Scanning electron microscopy (SEM) imaging was used to investigate the homogeneity and the rheology of the cellulose-composite materials (Figure 3). Figure 3A clearly shows distinct areas of crystalline material throughout the film demonstrating the insolubility of the poly-lysine hydrobromide resulting in discrete 'patches' of surface reactivity. In fact, these 'patches' became prominent during the colorimetric laccase-catalyzed assay. The homogenous materials, figures 3B-3C, containing BSA, and JEFFAMINE® D-230, respectively represent the materials having the highest measured enzymatic activity. It appears, based on their homogeneity and high specific activities, that these materials possess a higher concentration of surface primary amine groups allowing for an increased number of protein attachment sites. Images 3D, E, F, and Ha-b confirm heterogeneity of the materials which may correspond to decreasing solubility of the higher the molecular weight JEFFAMINES® and the PEIs in the [C₄mim]Cl IL-cellulose mixture. Again, the lower activities appear to be related to lower levels of enzyme attachment attributed to uneven distribution of these co-polymers throughout the film.

**Table 3: Activity of Rhus vernificera laccase covalently attached to IL-regenerated cellulose composite films.**

| Form of Enzyme | 1° Amine Containing Polymer | Linker Molecule | Specific Activity (*µ*M/min/mg laccase) | Specific Activity/ mmol NH₂ |
|---|---|---|---|---|
| Native (aqueous) | n/a | n/a | 0.298* | - |
| Native (entrapped) | n/a | n/a | 0.052* | - |
| IL-coated (entrapped) | n/a | n/a | 0.086* | - |
| Native (surface attachment) | A | glutaraldehyde | 0.045 ± 0.052 | 1.149 |
| Native (surface attachment) | B | glutaraldehyde | 0.135 ± 0.009 | 18.07 |
| Native (surface attachment) | C | glutaraldehyde | 0.188 ± 0.020 | 0.136 |
| Native (surface attachment) | D | glutaraldehyde | 0.090 ± 0.027 | 0.093 |
| Native (surface attachment) | E | glutaraldehyde | 0.094 ± 0.037 | 0.633 |
| Native (surface attachment) | F | glutaraldehyde | 0.086 ± 0.015 | 1.104 |
| Native (surface attachment) | G | glutaraldehyde | 0.028 ± 0.009 | 0.005 |
| Native (surface attachment) | H | glutaraldehyde | nd | nd |
| Native | C | n/a | 0.140 ± 0.000 | 0.099 |
| Native | n/a | n/a | 0.073 ± 0.005 | - |

| | | | | |
|---|---|---|---|---|
| *Results from Turner et al., Biomacromolecules 2004; 5:1379-1384; U.S. Pat. No. 6,808,557. | | | | |

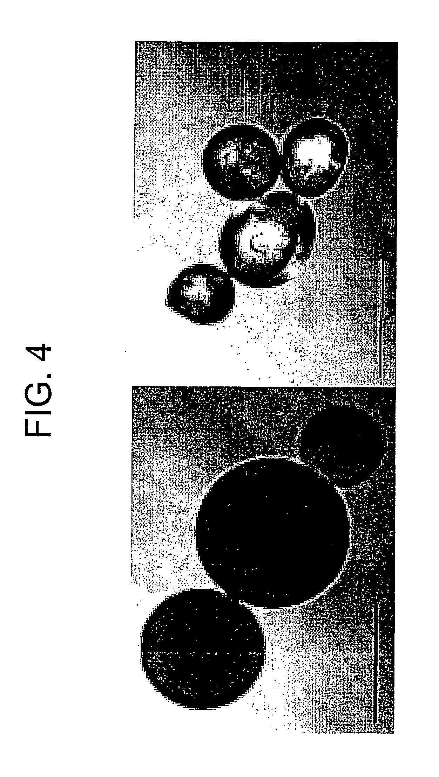

Based upon the laccase-catalyzed oxidation of syringaldazine, it is clear that composites B and C can be used as solid support materials. Their suitability under practical conditions was assessed by comparison with commercially available bead-immobilized enzymes. We chose the simple transesterification of ethyl butyrate with *n*-butanol (Lau et al., Green Chem 2004, 6:483-487) to compare *Candida antartica* lipase B (CaLB) immobilized on B, prepared in a bead form, to commercially available Novozym 435 (macroporous acrylic resin immobilized *Candida antarctica* lipase) beads available through Sigma (Milwaukee, WI). Cellulose composite beads with diameters in the range 0.25 to 1.0 mm could be prepared easily using an ultrahigh-torque stirrer, and had comparable size and shape to the commercial product (Figure 4).

Transesterifications were carried out in *tert*-butanol (5.0 mL), containing 0.06 M ethyl butyrate, 0.12 M *n*-butanol, 0.06 M 1,3-dimethoxybenzene (as internal standard), and 120 to 150 mg of immobilized lipase. The reaction mixtures were incubated for 24 h at 40 °C and 150 rpm before dilution in 65:35 MeOH:acetate buffer (pH 4.5) for analysis by reverse phase HPLC using a refractive index detector. Results of the study show that the commercially available Novozym 435 catalyzed 100% relative conversion of the ethyl butyrate while composite B-immobilized CaLB was responsible for an 87% relative conversion. Although these materials have been compared here as a means of determining the suitability of the materials for immobilized biotransformations, it can be noted that commercially available products have been fabricated to precise measurements after thorough characterization and optimization procedures. Such optimization procedures can also be used for the materials disclosed herein.

In the above examples, the dissolution characteristics of ILs for cellulose allowed physical encapsulation of macromolecules such as *Rhus vernificera* laccase (E.C. # 1.10.3.2) in regenerated cellulose films. These methods demonstrate the compatibility of biomolecules such as enzymes with IL-cellulose environments (Turner et al., Biomacromolecules 2004, 5:1379-1384; U.S. Pat. No. 6,808,557). Further, while enzymatically active membranes were prepared as disclosed herein, a loss of activity of the entrapped laccase, compared to the enzyme in an aqueous environment, was observed.

This loss of activity, relative to that of the free enzyme can be attributed to either decreased conformational flexibility when constrained within the support matrix or to decreased diffusion limitations for the transport of substrates and products into and out of the cellulose films. In order to alleviate these problems and enhance activity, surface immobilization rather than bulk encapsulation can be a desired immobilization approach (Illanes, Elec J Biotechnol 1999, 2:1-9). Both physical and chemical attachment of catalysts to support materials is possible and have been widely demonstrated (Gemeiner, In Enzyme Engineering, Gemeiner, Ed., Ellis Horwood Series in Biochemistry and Biotechnology, Ellis Horwood Limited: West Sussex, England, 1992, pp. 158-179; Froehner and Eriksson, Acta Chem Scand B 1975, 29:691). Physical attachment is achieved through simple adsorption or weak ionic interaction between the enzyme and the surface of the support material; however, this type of attachment is easily reversible and generally associated with enzyme leaching. Chemical attachment through covalent bonds on the other hand leads to typically more stable, nonreversible binding and is the preferred mechanism for this application due to its increased stability.

As a means of increasing affinity of the biocatalyst and stability of the attachment bonds, surface active groups on the support material can be desired. Described herein, in one aspect, is a process using a single-step dissolution and regeneration procedure (PCT Publication No. WO03/029329 A2; Swatloski et al., J Am Chem Soc 124:4974-4975, 2002; Swatloski et al., "Ionic Liquids for the Dissolution and Regeneration of Cellulose" In Molten Salts XIII: Proceedings of the International Symposium, Trulove, et al., Eds., The Electrochemical Society: Pennington, NJ, 2002, Vol. 2002-19, pp. 155-164), to obtain cellulose-based composite materials formed as both transparent thin films and beads containing pendant primary amine functions providing the reactive surface coating necessary for bioconjugation. Use of such composites as immobilization materials has been demonstrated using a laccase catalyzed oxidation reaction as a model system.

Other advantages which are obvious and which are inherent to the invention will be evident to one skilled in the art. It will be understood that certain features and sub-combinations are of utility and may be employed without reference to other features and sub-combinations. Since many possible embodiments may be made of the invention without departing from the scope thereof, it is to be understood that all matter herein set forth or shown in the accompanying drawings is to be interpreted as illustrative and not in a limiting sense.

## Claims

1. A cellulose/active substance composite, comprising a regenerated cellulose matrix, a first active substance substantially homogeneously distributed within the matrix of regenerated cellulose, a linker, and a second active substance, wherein the sinker is bonded to the first and second active substances, wherein the regenerated cellulose matrix is regenerated from a hydrophilic ionic liquid and in the presence of the first active substance, and wherein the first active substance prior to being bonded to the linker comprises a polymeric amine selected from the group consisting of polylysine, polyvinyl amine, polyalkyleneimine and polyether amine.

2. The composite of claim 1, wherein the regenerated cellulose has substantially the same molecular weight as a starting cellulose from which the regenerated cellulose is prepared, wherein the regenerated cellulose is substantially free of an increased amount of substituent groups relative to the starting cellulose, and wherein the regenerated cellulose is substantially free of entrapped ionic liquid degradation products.

3. The composite of any of the foregoing claims, wherein the weight ratio of regenerated cellulose to first active substance and/or second active substance is from about 1000:1 to about 1:2.

4. The composite of any of the foregoing claims, wherein the linker prior to being bonded to the first and second active substances comprises at least two electrophilic functional groups, or at least one nucleotide functional group and at least one electrophilic functional group..

5. The composite of any of the foregoing claims, wherein the linker prior to being bonded to the first and second active substances comprises a diester or a dialdehyde.

6. The composite of any one of the foregoing claims, wherein the linker prior to being bonded to the first and second active substances comprises gluteraldehyde.

7. The composite of any of the foregoing claims, wherein the second active substance comprises a nucleophilic functional group, or an electrophilic functional group.

8. The composite of any of the forgoing claims, wherein the second active substance comprises a microbial cell, herbicide, an insecticide, a fungicide, a repellent for an animal or insect, a plant growth regulator, a fertilizer, a flavor or odor composition, a catalyst, a photoactive agent, an indicator, a dye, an UV adsorbent, antibacterial agent, an antiviral agent, a biomolecule, a peptide, protein enzyme, or antibody, a nucleic acid, aptamer, or ribozyme or a mixture thereof.

9. A method for preparing a cellulose/active substance composite as claimed in claims 1 to 8, comprising
a. providing a composition comprising a regenerated cellulose matrix and a first active substance, wherein the first active substance prior to being bonded to the linker comprises a polymeric amine selected from the group consisting of polylysine, polyvinyl amine, polyalkyleneimine and polyether amine, and is substantially homogeneously distributed within the regenerated cellulose matrix, wherein providing the composition comprising the regenerated cellulose matrix and the first active substance, comprises:
(i) providing a composition comprising a starting cellulose, the first active substance, and a hydrophilic ionic liquid, wherein the starting cellulose is dissolved in the ionic liquid and wherein the ionic liquid is substantially free of water, non-ionic organic solvent, and nitrogen-containing bases; and
(ii) admixing the composition of step (a) with a liquid non-solvent for the cellulose, wherein the non-solvent is miscible with the ionic liquid and wherein the first active substance is substantially insoluble in the non-solvent,
wherein a composition comprising the regenerated cellulose matrix and an ionic liquid phase is provided;
b. contacting the first active substance with a linker to bond the linker to the first active substance; and
c. contacting a second active substance with the linker to bond the linker to the second active substance,
thereby providing a cellulose/active substance composite.

10. The method of the claim 9, wherein the linker is contacted to the first active substance prior to contacting the second active substance to the linker.

11. The method of any of claims 9-10, wherein the linker is contacted to the first active substance prior to providing the regenerated cellulose composition.

12. The method of any of claims 9-11, wherein the linker is contacted to the second active substance prior to contacting the first active substance to the linker.

13. The method of any of claims 9-12, wherein prior to providing the regenerated cellulose composition the linker is contacted to the first active substance and then contacted to the second active substance.

14. The method of any of claims 9-13, wherein the admixing step is carried out by extruding the composition of step (a) through a die and into the non-solvent.

15. The method of any of claims 9-14, further comprising collecting the regenerated cellulose matrix.

16. The method of any of claims 9-15, wherein the starting cellulose comprises fibrous cellulose, wood pulp, linters, cotton, or paper.

17. The method of any of claims 9-16, wherein the ionic liquid is molten at a temperature of less than about 150 °C.

18. The method of any of claims 9-17, wherein the ionic liquid is molten at a temperature of from about -44 °C to about 120 °C.

19. The method of any of claims 9-18, wherein the ionic liquid comprises one or more cations and one or more anions and wherein the one or more cations comprise one or more compounds having the formula 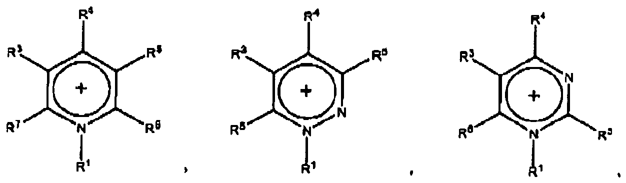 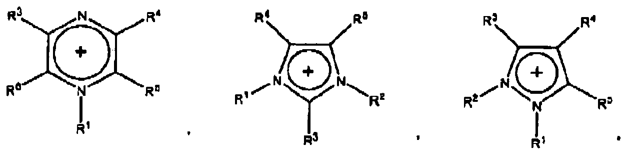 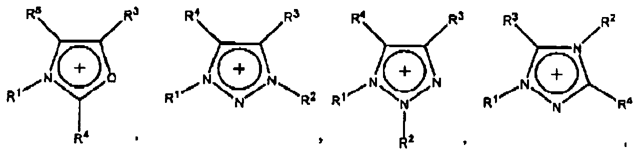 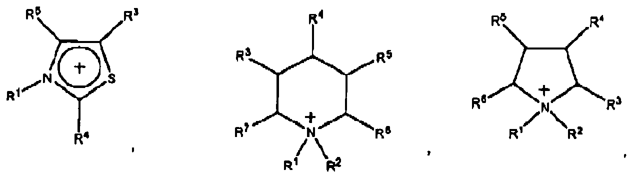 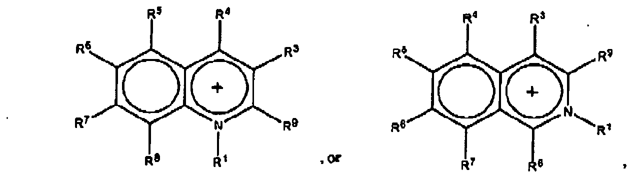 wherein R¹ and R² are independently a C₁-C₆ alkyl group or a C₁-C₆ alkoxyalkyl group, and R³, R⁴', R⁵, R⁶, R⁷, R⁸ and R⁹ are independently H, a C₁-C₆ alkyl, a C₁-C₆ alkoxyalkyl group, or a C₁-C₆ alkoxy group, and the one or more anions comprise one or more of a halogen, perchlorate, pseudohalogen, or C₁-C₆ carboxylate.

20. The method of any one of claims 9-19, wherein ionic liquid comprises one or more cations and one or more anions and wherein the one or more cations comprise one or more compounds having the formula: 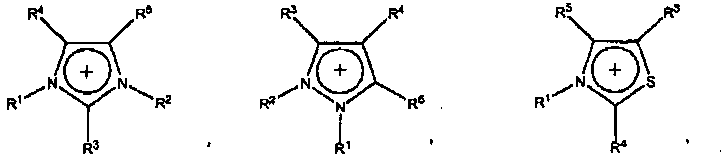 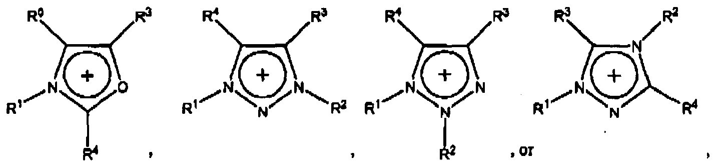 wherein R¹ and R² are independently a C₁-C₆ alkyl group or a C₁-C₆ alkoxyalkyl group, and R³, R⁴ and R⁵ independently H, a C₁-C₆ alkyl group, a C₁-C₆ alkoxyalkyl group, or a C₁-C₆ alkoxy group, and the one or more anions comprise one or more of a halogen or pseudohalogen.

21. The method of any of claims 9-20, wherein the one or more cations comprise an imidazolium ion having the formula: 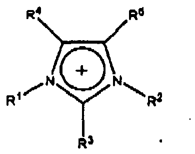 wherein R¹ and R² are C₁-C₆ alkyl.

22. The method of any of claims 9-21, wherein R¹ or R² is methyl.

23. The method of any of claims 9-22, wherein R¹ is C₁-C₄ alkyl and R² is methyl.

24. The method of any of claims 9-23, wherein R³, R⁴, and R⁵ each are H.

25. The method of any of claims 9-24, wherein ionic liquid comprises one or more cations and one or more anions and the one or more anions comprise one or more of a halogen, perchlorate, pseudohalogen, or C₁-C₆ carboxylate.

26. The method of any of claims 9-25, wherein the one or more anions is chloride.

27. The method of any of claims 9-26, wherein the non-solvent is miscible with water.

28. The method of any of claims 9-27, wherein the non-solvent is water, an alcohol, or a ketone.

29. The method of any of claims 9-28, wherein the non-solvent is water.

30. The method of any of claims 9-29, wherein the starting cellulose is initially present in the composition of step (a) in an amount of about 10 to about 25 weight percent of the composition of step (a).

31. The method of any of claims 9-30, wherein the first active substance is coated with a hydrophobic ionic liquid prior to being dissolved or dispersed in the hydrophilic ionic liquid, and wherein the hydrophobic ionic liquid is not miscible with the non-solvent.

32. A cellulose/active substance composite prepared by the method of claims 9-31.

33. An article comprising the composition of any of claims 1-8 and 32.

34. The article of claim 33, wherein the article comprises paper and/or a textile.

35. The article of any of claims 33-34, where the article comprises protective clothing.

36. The article of any of claims 33-35, wherein the clothing comprises a surgical grown, glove, mask, or bandage.

## Patentansprüche

1. Cellulose/Wirkstoff-Komposit, das Folgendes umfasst: eine regenerierte Cellulosematrix, einen ersten Wirkstoff, der im Wesentlichen homogen innerhalb der regenerierten Cellulosematrix verteilt ist, einen Linker und einen zweiten Wirkstoff, wobei der Linker an den ersten und den zweiten Wirkstoff gebunden ist, wobei die regenerierte Cellulosematrix von einer hydrophilen ionischen Flüssigkeit und in Anwesenheit des ersten Wirkstoffs regeneriert wird und wobei der erste Wirkstoff vor dem Binden an den Linker ein polymeres Amin umfasst, das ausgewählt ist aus der Gruppe bestehend aus Polylysin, Polyvinylamin, Polyalkylenimin und Polyetheramin.

2. Komposit nach Anspruch 1, wobei die regenerierte Cellulose im Wesentlichen die gleiche Molekülmasse wie eine Ausgangscellulose hat, aus der die regenerierte Cellulose hergestellt wird, wobei die regenerierte Cellulose im Wesentlichen frei von einer erhöhten Menge an Substituentengruppen relativ zur Ausgangscellulose ist und wobei die regenerierte Cellulose im Wesentlichen frei von eingeschlossenen ionischen flüssigen Abbauprodukten ist.

3. Komposit nach einem der vorherigen Ansprüche, wobei das Gewichtsverhältnis zwischen regenerierter Cellulose und erstem Wirkstoff und/oder zweitem Wirkstoff von etwa 1000:1 bis etwa 1:2 beträgt.

4. Komposit nach einem der vorherigen Ansprüche, wobei der Linker vor dem Binden an den ersten und den zweiten Wirkstoff wenigstens zwei elektrophile funktionelle Gruppen oder wenigstens eine funktionelle Nucleotidgruppe und wenigstens eine elektrophile funktionelle Gruppe umfasst.

5. Komposit nach einem der vorherigen Ansprüche, wobei der Linker vor dem Binden an den ersten und den zweiten Wirkstoff einen Diester oder einen Dialdehyd umfasst.

6. Komposit nach einem der vorherigen Ansprüche, wobei der Linker vor dem Binden an den ersten und den zweiten Wirkstoff Gluteraldehyd umfasst.

7. Komposit nach einem der vorherigen Ansprüche, wobei der zweite Wirkstoff eine nucleophile funktionelle Gruppe oder eine elektrophile funktionelle Gruppe umfasst.

8. Komposit nach einem der vorherigen Ansprüche, wobei der zweite Wirkstoff eine mikrobielle Zelle, ein Herbizid, ein Insektizid, ein Fungizid, ein Abwehrmittel für ein Tier oder Insekt, einen Pflanzenwachstumsregulator, ein Düngemittel, einen Aromastoff oder eine Duftzusammensetzung, einen Katalysator, ein fotoaktives Mittel, einen Indikator, einen Farbstoff, ein UV-Adsorptionsmittel, ein antibakterielles Mittel, ein antivirales Mittel, ein Biomolekül, ein Peptid, ein Proteinenzym oder einen Antikörper, eine Nucleinsäure, ein Aptamer oder ein Ribozym oder ein Gemisch davon umfasst.

9. Verfahren zur Herstellung eines Cellulose/Wirkstoff-Komposits nach Anspruch 1 bis 8, das Folgendes beinhaltet:
a. Bereitstellen einer Zusammensetzung, die eine regenerierte Cellulosematrix und einen ersten Wirkstoff beinhaltet, wobei der erste Wirkstoff vor dem Binden an den Linker ein polymeres Amin umfasst, das ausgewählt ist aus der Gruppe bestehend aus Polylysin, Polyvinylamin, Polyalkylenimin und Polyetheramin, und im Wesentlichen homogen innerhalb der regenerierten Celluosematrix verteilt ist, wobei das Bereitstellen der Zusammensetzung, die die regenerierte Cellulosematrix und den ersten Wirkstoff beinhaltet, Folgendes beinhaltet:
(i) Bereitstellen einer Zusammensetzung, die Folgendes beinhaltet: eine Ausgangscellulose, den ersten Wirkstoff und eine hydrophile ionische Flüssigkeit, wobei die Ausgangscellulose in der ionischen Flüssigkeit gelöst wird und wobei die ionische Flüssigkeit im Wesentlichen frei von Wasser, nicht-ionischem organischem Lösungsmittel und stickstoffhaltigen Basen ist; und
(ii) Mischen der Zusammensetzung aus Schritt (a) mit einem flüssigen Nichtlösungsmittel für die Cellulose, wobei das Nichtlösungsmittel mit der ionischen Flüssigkeit mischbar ist und wobei der erste Wirkstoff in dem Nichtlösungsmittel unlöslich ist,
wobei eine Zusammensetzung, die die regenerierte Cellulosematrix und eine ionische flüssige Phase beinhaltet, bereitgestellt wird;
b. Inkontaktbringen des ersten Wirkstoffs mit einem Linker, um den Linker an den ersten Wirkstoff zu binden; und
c. Inkontaktbringen eines zweiten Wirkstoffs mit dem Linker, um den Linker an den zweiten Wirkstoff zu binden,
wodurch ein Cellulose/Wirkstoff-Komposit bereitgestellt wird.

10. Verfahren nach Anspruch 9, wobei der Linker mit dem ersten Wirkstoff in Kontakt gebracht wird, bevor der zweite Wirkstoff mit dem Linker in Kontakt gebracht wird.

11. Verfahren nach einem der Ansprüche 9-10, wobei der Linker mit dem ersten Wirkstoff in Kontakt gebracht wird, bevor die regenerierte Cellulose-Zusammensetzung bereitgestellt wird.

12. Verfahren nach einem der Ansprüche 9-11, wobei der Linker mit dem zweiten Wirkstoff in Kontakt gebracht wird, bevor der erste Wirkstoff mit dem Linker in Kontakt gebracht wird.

13. Verfahren nach einem der Ansprüche 9-12, wobei vor dem Bereitstellen der regenerierten Cellulose-Zusammensetzung der Linker mit dem ersten Wirkstoff in Kontakt gebracht wird und dann mit dem zweiten Wirkstoff in Kontakt gebracht wird.

14. Verfahren nach einem der Ansprüche 9-13, wobei der Mischschritt das Extrudieren der Zusammensetzung aus Schritt (a) durch eine Düse und in das Nichtlösungsmittel beinhaltet.

15. Verfahren nach einem der Ansprüche 9-14, das ferner das Auffangen der regenerierten Cellulosematrix beinhaltet.

16. Verfahren nach einem der Ansprüche 9-15, wobei die Ausgangscellulose faserige Cellulose, Zellstoff, Linters, Baumwolle oder Papier umfasst.

17. Verfahren nach einem der Ansprüche 9-16, wobei die ionische Flüssigkeit bei einer Temperatur von weniger als etwa 150°C geschmolzen wird.

18. Verfahren nach einem der Ansprüche 9-17, wobei die ionische Flüssigkeit bei einer Temperatur von etwa -44°C bis etwa 120°C geschmolzen wird.

19. Verfahren nach einem der Ansprüche 9-18, wobei die ionische Flüssigkeit ein oder mehrere Kationen und ein oder mehrere Anionen umfasst und wobei die ein oder mehreren Kationen eine oder mehrere Verbindungen mit der folgenden Formel umfassen: 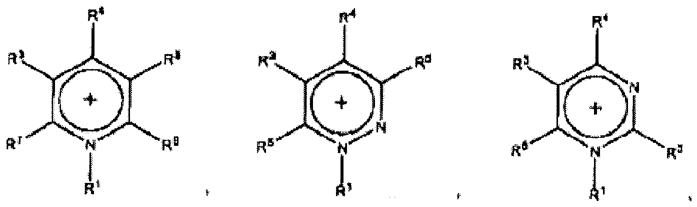 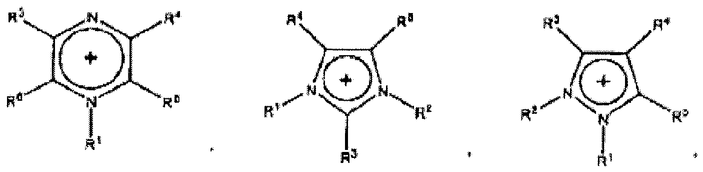 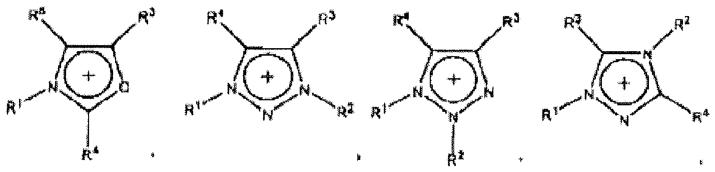 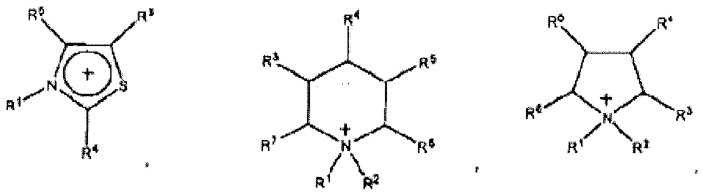 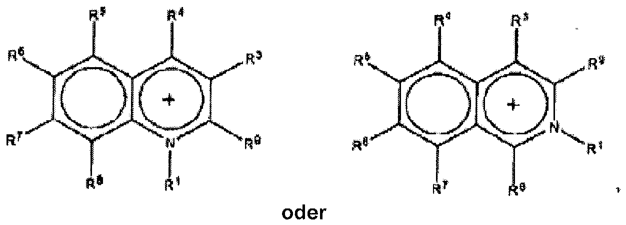 wobei R¹ und R² unabhängig eine C₁-C₆ Alkylgruppe oder eine C₁-C₆ Alkoxyalkylgruppe sind und R³, R⁴, R⁵, R⁶, R⁷, R⁸ und R⁹ unabhängig H, ein C₁-C₆ Alkyl, eine C₁-C₆ Alkoxyalkylgruppe oder eine C₁-C₆ Alkoxygruppe sind und die ein oder mehreren Anionen eines oder mehrere aus einem Halogen, Perchlorat, Pseudohalogen oder C₁-C₆ Carboxylat umfassen.

20. Verfahren nach einem der Ansprüche 9-19, wobei die ionische Flüssigkeit ein oder mehrere Kationen und ein oder mehrere Anionen umfasst und wobei die ein oder mehreren Kationen eine oder mehrere Verbindungen mit der folgenden Formel umfassen: 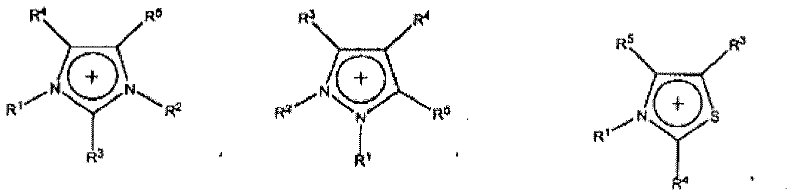 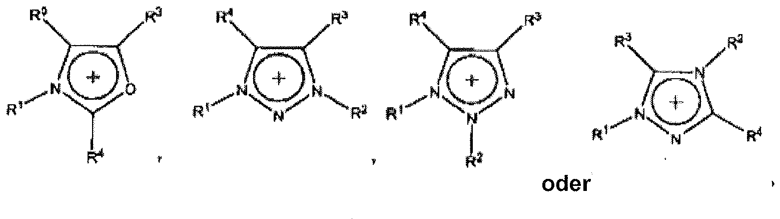 wobei R¹ und R² unabhängig eine C₁-C₆ Alkylgruppe oder eine C₁-C₆ Alkoxyalkylgruppe sind und R³, R⁴ und R⁵ unabhängig H, eine C₁-C₆ Alkylgruppe, eine C₁-C₆ Alkoxyalkylgruppe oder eine C₁-C₆ Alkoxygruppe sind und die ein oder mehreren Anionen eines oder mehrere aus einem Halogen oder Pseudohalogen umfassen.

21. Verfahren nach einem der Ansprüche 9-20, wobei die ein oder mehreren Kationen ein Imidazoliumion mit der folgenden Formel umfassen: 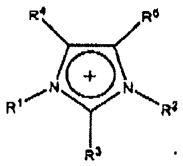 wobei R¹ und R² C₁-C₆ Alkyl sind.

22. Verfahren nach einem der Ansprüche 9-21, wobei R¹ oder R² Methyl ist.

23. Verfahren nach einem der Ansprüche 9-22, wobei R¹ C₁-C₄ Alkyl ist und R² Methyl ist.

24. Verfahren nach einem der Ansprüche 9-23, wobei R³, R⁴ und R⁵ jeweils H sind.

25. Verfahren nach einem der Ansprüche 9-24, wobei die ionische Flüssigkeit ein oder mehrere Kationen und ein oder mehrere Anionen umfasst und die ein oder mehreren Anionen eines oder mehrere aus einem Halogen, Perchlorat, Pseudohalogen oder C₁-C₆ Carboxylat umfassen.

26. Verfahren nach einem der Ansprüche 9-25, wobei die ein oder mehreren Anionen Chlorid sind.

27. Verfahren nach einem der Ansprüche 9-26, wobei das Nichtlösungsmittel mit Wasser mischbar ist.

28. Verfahren nach einem der Ansprüche 9-27, wobei das Nichtlösungsmittel Wasser, ein Alkohol oder ein Keton ist.

29. Verfahren nach einem der Ansprüche 9-28, wobei das Nichtlösungsmittel Wasser ist.

30. Verfahren nach einem der Ansprüche 9-29, wobei die Ausgangscellulose anfänglich in der Zusammensetzung aus Schritt (a) in einer Menge von etwa 10 bis etwa 25 Gew.-% der Zusammensetzung aus Schritt (a) vorliegt.

31. Verfahren nach einem der Ansprüche 9-30, wobei der erste Wirkstoff mit einer hydrophoben ionischen Flüssigkeit beschichtet wird, bevor er in der hydrophilen ionischen Flüssigkeit gelöst oder dispergiert wird, und wobei die hydrophobe ionische Flüssigkeit mit dem Nichtlösungsmittel nicht mischbar ist.

32. Cellulose/Wirkstoff-Komposit, das mit dem Verfahren nach den Ansprüchen 9-31 hergestellt wird.

33. Artikel, der die Zusammensetzung nach einem der Ansprüche 1-8 und 32 umfasst.

34. Artikel nach Anspruch 33, wobei der Artikel Papier und/oder eine Textilie umfasst.

35. Artikel nach einem der Ansprüche 33-34, wobei der Artikel Schutzkleidung umfasst.

36. Artikel nach einem der Ansprüche 33-35, wobei die Kleidung einen Chirurgenkittel, -handschuh, Mundschutz oder chirurgischen Verband umfasst.

## Revendications

1. Composite de cellulose et de substance active, comprenant une matrice de cellulose régénérée, une première substance active répartie de manière sensiblement homogène dans la matrice de cellulose régénérée, un lieur et une seconde substance active, dans lequel le lieur est lié aux première et seconde substances actives, dans lequel la matrice de cellulose régénérée est régénérée à partir d'un liquide hydrophile ionique et en présence de la première substance active, et dans lequel la première substance active, avant d'être liée au lieur, comprend une amine polymère choisie dans le groupe constitué de la polylysine, de la polyvinylamine, de la polyalkylèneimine et de la polyétheramine.

2. Composite selon la revendication 1, dans lequel la cellulose régénérée a sensiblement le même poids moléculaire qu'une cellulose de départ à partir de laquelle la cellulose régénérée est préparée, dans lequel la cellulose régénérée est sensiblement exempte d'une quantité accrue de groupements substituants par rapport à la cellulose de départ, et dans lequel la cellulose régénérée est sensiblement exempte de produits de dégradation du liquide ionique piégés.

3. Composite selon l'une quelconque des revendications précédentes, dans lequel le rapport pondéral de la cellulose régénérée à la première substance active et/ou à la seconde substance active est d'environ 1 000:1 à environ 1:2.

4. Composite selon l'une quelconque des revendications précédentes, dans lequel le lieur, avant d'être lié aux première et seconde substances actives, comprend au moins deux groupements fonctionnels électrophiles ou au moins un groupement fonctionnel nucléotidique et au moins un groupement fonctionnel électrophile.

5. Composite selon l'une quelconque des revendications précédentes, dans lequel le lieur, avant d'être lié aux première et seconde substances actives, comprend un diester ou un dialdéhyde.

6. Composite selon l'une quelconque des revendications précédentes, dans lequel le lieur, avant d'être lié aux première et seconde substances actives, comprend du glutaraldéhyde.

7. Composite selon l'une quelconque des revendications précédentes, dans lequel la seconde substance active comprend un groupement fonctionnel nucléophile ou un groupement fonctionnel électrophile.

8. Composite selon l'une quelconque des revendications précédentes, dans lequel la seconde substance active comprend une cellule microbienne, un herbicide, un insecticide, un fongicide, un répulsif pour un animal ou un insecte, un régulateur de croissance végétale, un engrais, une composition aromatique ou odorante, un catalyseur, un agent photo-actif, un indicateur, un colorant, un adsorbant d'UV, un agent antibactérien, un agent antiviral, une biomolécule, un peptide, un enzyme de protéine ou un anticorps, un acide nucléique, un aptamère ou un ribozyme, ou un mélange de ceux-ci.

9. Procédé de préparation d'un composite de cellulose et de substance active selon les revendications 1 à 8, comprenant les étapes consistant à :
a. fournir une composition comprenant une matrice de cellulose régénérée et une première substance active, dans lequel la première substance active, avant d'être liée au lieur, comprend une amine polymère choisie dans le groupe constitué de la polylysine, de la polyvinylamine, de la polyalkylèneimine et de la polyétheramine, et est répartie de manière sensiblement homogène dans la matrice de cellulose régénérée, dans lequel la fourniture de la composition comprenant la matrice de cellulose régénérée et la première substance active comprend les étapes consistant à :
(i) fournir une composition comprenant une cellulose de départ, la première substance active et un liquide ionique hydrophile, dans lequel la cellulose de départ est dissoute dans le liquide ionique et dans lequel le liquide ionique est sensiblement exempt d'eau, de solvant organique non ionique et de bases contenant de l'azote ; et
(ii) mélanger la composition de l'étape (a) avec un non-solvant liquide pour la cellulose, dans lequel le non-solvant est miscible avec le liquide ionique et dans lequel la première substance active est sensiblement insoluble dans le non-solvant,
dans lequel une composition comprenant la matrice de cellulose régénérée et une phase de liquide ionique est fournie ;
b. mettre en contact la première substance active avec un lieur pour lier le lieur à la première substance active ; et
c. mettre en contact une seconde substance active avec le lieur pour lier le lieur à la seconde substance active,
fournissant de la sorte un composite de cellulose et de substance active.

10. Procédé selon la revendication 9, dans lequel le lieur est mis en contact avec la première substance active avant de mettre en contact la seconde substance active avec le lieur.

11. Procédé selon l'une quelconque des revendications 9 et 10, dans lequel le lieur est mis en contact avec la première substance active avant de fournir la composition de cellulose régénérée.

12. Procédé selon l'une quelconque des revendications 9 à 11, dans lequel le lieur est mis en contact avec la seconde substance active avant de mettre en contact la première substance active avec le lieur.

13. Procédé selon l'une quelconque des revendications 9 à 12, dans lequel, avant de fournir la composition de cellulose régénérée, le lieur est mis en contact avec la première substance active, puis mis en contact avec la seconde substance active.

14. Procédé selon l'une quelconque des revendications 9 à 13, dans lequel l'étape de mélange est effectuée en extrudant la composition de l'étape (a) à travers une filière et dans le non-solvant.

15. Procédé selon l'une quelconque des revendications 9 à 14, comprenant en outre la récupération de la matrice de cellulose régénérée.

16. Procédé selon l'une quelconque des revendications 9 à 15, dans lequel la cellulose de départ comprend de la cellulose fibreuse, de la pâte de bois, des linters, du coton ou du papier.

17. Procédé selon l'une quelconque des revendications 9 à 16, dans lequel le liquide ionique est fondu à une température inférieure à environ 150 °C.

18. Procédé selon l'une quelconque des revendications 9 à 17, dans lequel le liquide ionique est fondu à une température comprise entre environ -44 °C et environ 120 °C.

19. Procédé selon l'une quelconque des revendications 9 à 18, dans lequel le liquide ionique comprend un ou plusieurs cations et un ou plusieurs anions et dans lequel le ou les cations comprend ou comprennent un ou plusieurs composés de formule : 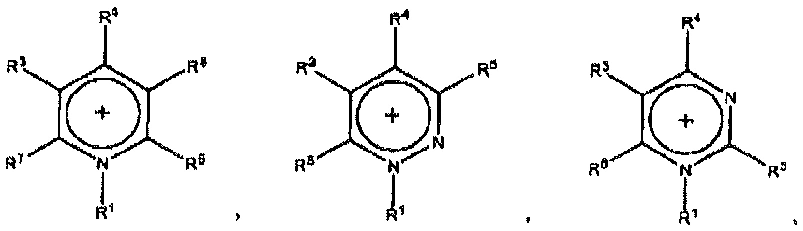 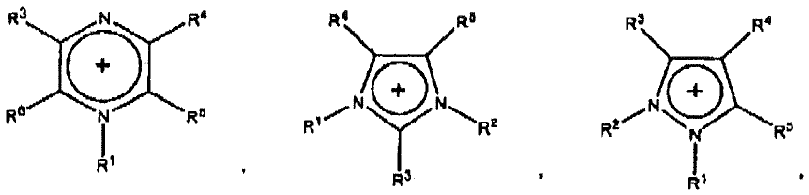 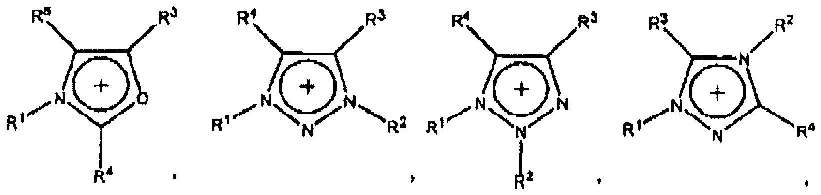 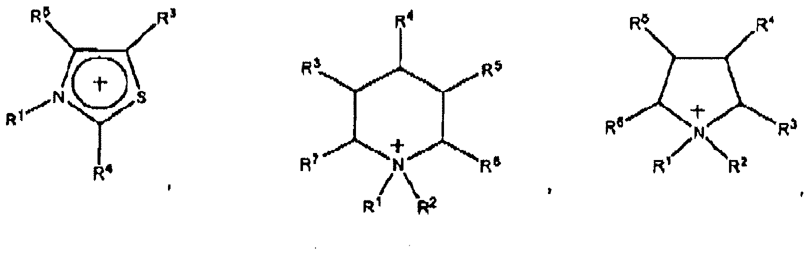 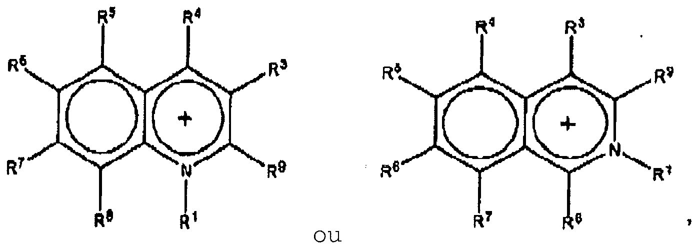 dans laquelle R¹ et R² sont indépendamment un groupement alkyle en C₁-C₆ ou un groupement alcoxyalkyle en C₁-C₆, et R³, R⁴, R⁵, R⁶, R⁷, R⁸ et R⁹ sont indépendamment H, un groupement alkyle en C₁-C₆, un groupement alcoxyalkyle en C₁-C₆ ou un groupement alcoxy en C₁-C₆, et le ou les anions comprend ou comprennent un ou plusieurs éléments choisis parmi un halogène, un perchlorate, un pseudo-halogène ou un carboxylate en C₁-C₆.

20. Procédé selon l'une quelconque des revendications 9 à 19, dans lequel le liquide ionique comprend un ou plusieurs cations et un ou plusieurs anions et dans lequel le ou les cations comprend ou comprennent un ou plusieurs composés de formule : 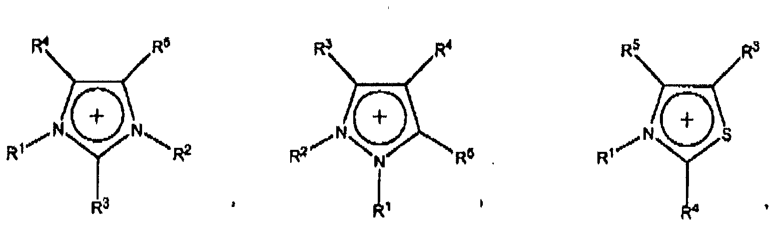 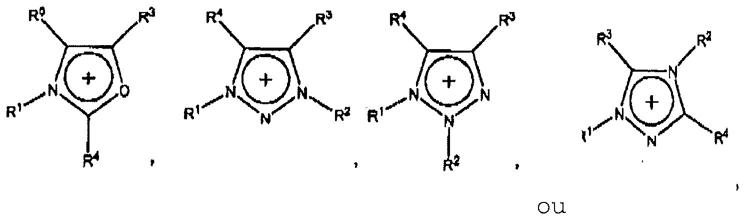 dans laquelle R¹ et R² sont indépendamment un groupement alkyle en C₁-C₆ ou un groupement alcoxyalkyle en C₁-C₆ et R³, R⁴ et R⁵ représentent indépendamment H, un groupement alkyle en C₁-C₆, un groupement alcoxyalkyle en C₁-C₆ ou un groupement alcoxy en C₁-C₆, et le ou les anions comprend ou comprennent un ou plusieurs éléments choisis parmi un halogène ou un pseudo-halogène.

21. Procédé selon l'une quelconque des revendications 9 à 20, dans lequel le ou les cations comprend ou comprennent un ion d'imidazolium de formule : 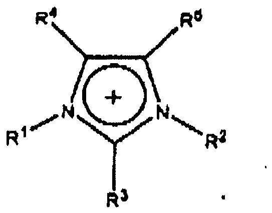 dans laquelle R¹ et R² sont un groupement alkyle en C₁-C₆.

22. Procédé selon l'une quelconque des revendications 9 à 21, dans lequel R¹ ou R² est un groupement méthyle.

23. Procédé selon l'une quelconque des revendications 9 à 22, dans lequel R¹ est un groupement alkyle en C₁-C₄ et R² est un groupement méthyle.

24. Procédé selon l'une quelconque des revendications 9 à 23, dans lequel R³, R⁴ et R⁵ sont chacun H.

25. Procédé selon l'une quelconque des revendications 9 à 24, dans lequel le liquide ionique comprend un ou plusieurs cations et un ou plusieurs anions et le ou les anions comprend ou comprennent un ou plusieurs éléments choisis parmi un halogène, un perchlorate, un pseudo-halogène ou un carboxylate en C₁-C₆.

26. Procédé selon l'une quelconque des revendications 9 à 25, dans lequel le ou les anions est ou sont un chlorure.

27. Procédé selon l'une quelconque des revendications 9 à 26, dans lequel le non-solvant est miscible avec l'eau.

28. Procédé selon l'une quelconque des revendications 9 à 27, dans lequel le non-solvant est de l'eau, un alcool ou une cétone.

29. Procédé selon l'une quelconque des revendications 9 à 28, dans lequel le non-solvant est de l'eau.

30. Procédé selon l'une quelconque des revendications 9 à 29, dans lequel la cellulose de départ est initialement présente dans la composition de l'étape (a) en quantité d'environ 10 à environ 25 % en poids de la composition de l'étape (a).

31. Procédé selon l'une quelconque des revendications 9 à 30, dans lequel la première substance active est recouverte d'un liquide ionique hydrophobe avant d'être dissoute ou dispersée dans le liquide ionique hydrophile et dans lequel le liquide ionique hydrophobe n'est pas miscible avec le non-solvant.

32. Composite de cellulose et de substance active préparé par le procédé selon les revendications 9 à 31.

33. Article comprenant la composition selon l'une quelconque des revendications 1 à 8 et 32.

34. Article selon la revendication 33, dans lequel l'article comprend du papier et/ou un textile.

35. Article selon l'une quelconque des revendications 33 et 34, dans lequel l'article comprend un vêtement protecteur.

36. Article selon l'une quelconque des revendications 33 à 35, dans lequel le vêtement comprend une blouse, un gant, un masque ou une bande de type chirurgical.
